# EUROPEAN PATENT SPECIFICATION

(11) **EP 4 283 463 B1**
(45) Date of publication and mention of the grant of the patent: **08.04.2026**
(21) Application number: 22758911.6
(22) Date of filing: 24.02.2022
(51) Int. Cl.: G06F 9/451, B60K 35/53, B60R 11/02, B60K 35/00, B60K 35/22, G06F 3/04817, G06F 3/04886, B60K 35/10, B60K 35/28, B60R 11/00

(54) **DISPLAY METHOD ADAPTED TO DRIVING STATE OF VEHICLE, AND RELATED APPARATUS**
AN DEN FAHRZUSTAND EINES FAHRZEUGS ANGEPASSTES ANZEIGEVERFAHREN UND ZUGEHÖRIGE VORRICHTUNG
PROCÉDÉ D'AFFICHAGE ADAPTÉ À L'ÉTAT DE CONDUITE D'UN VÉHICULE ET APPAREIL ASSOCIÉ

(30) Priority: 24.02.2021 CN 202110206565
(43) Date of publication of application: 29.11.2023
(73) Proprietor: Huawei Technologies Co., Ltd., Shenzhen, Guangdong 518129 (CN)
(72) Inventor: HUANG, Lei, Shenzhen, Guangdong 518129 (CN); WANG, Guanhua, Shenzhen, Guangdong 518129 (CN); QI, Qi, Shenzhen, Guangdong 518129 (CN); HUANG, Xueyan, Shenzhen, Guangdong 518129 (CN)
(74) Representative: Isarpatent
(86) International application number: PCT/CN2022/077617
(87) International publication number: WO 2022/179547

(56) References cited:
- CN-A- 108 521 772
- CN-A- 109 383 404
- CN-A- 111 959 354
- CN-U- 206 520 559
- US-A1- 2009 171 529
- US-A1- 2016 193 923
- US-A1- 2019 041 652
- US-A1- 2019 193 644
- US-A1- 2019 193 644

## Description

### TECHNICAL FIELD

The present disclosure generally relates to the vehicle field, and the invention in particular relates to a display method for a cockpit display screen of a vehicle and a related apparatus.

### BACKGROUND

In a conventional car cockpit, at least one screen is generally configured for functions such as rear view display and map navigation. An instrument such as a dashboard is placed near a steering wheel for ease of viewing by a user. With development of display technologies, the dashboard may also be displayed by using a display screen.

Progress of the display technologies also brings changes to behavioral habits of the user. Therefore, the cockpit display screen needs to have more functions based on original display. For example, a large part of multimedia entertainment performed by the user in a process of using the vehicle needs to be implemented by using the screen. To better meet a market demand, layout of the cockpit display screen gradually presents a trend of multi-screen and large-screen. However, as an area of the screen increases, other problems are also caused. Because the screen needs to implement a function of the screen by emitting light, the light emitted by the screen causes interference to a driver. It is clear that a larger screen leads to more emitted light and greater interference. Therefore, an existing vehicle-mounted large-screen solution has some disadvantages.

US 2019/041652 A1 discloses a display system that includes a display that displays an image; a retainer that retains the display at any one of a plurality of retention positions with different exposure amounts of the display, in a predetermined location in a vehicle cabin, and retains the display at one of the plurality of retention positions according to a state of a vehicle, and a display controller that causes the display to display an image with content according to the retention position at which the display is retained by the retainer.

### SUMMARY

The object of the present invention is to provide a display method adaptive to a driving status of a vehicle and a related apparatus, to reduce interference caused by a screen to a driver while meeting an entertainment requirement of a user in the vehicle, and improve driving safety. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, the invention provides a cockpit display screen control method used to control a cockpit display screen in a vehicle, and the vehicle has a self-driving function. The method includes: controlling, in response to switching of the vehicle to a manual driving state, the cockpit display screen of the vehicle to present a first display state (a slender screen), where a screen height of the cockpit display screen in the first display state is a first height.

The cockpit display screen may be used to display driving-related information such as instrument information of the vehicle, navigation information, and surrounding environment information of the vehicle, and may also be used to play a movie, play a game, and the like. When the vehicle is in different driving states, a user expects to use the cockpit display screen to implement different functions. For example, when the vehicle is manually driven, the cockpit display screen needs to mainly display the driving-related information to reduce interference to a driver. When the vehicle is automatically driven or is in a parking state (the vehicle is stopped but not stalled), the cockpit display screen needs to meet more entertainment requirements of the user. According to a cockpit display screen control method proposed in this embodiment of this application, the cockpit display screen can adapt to a driving status, and more entertainment functions are provided for the user while a safety requirement is met. Once the user switches the vehicle to the manual driving state, the cockpit display screen is displayed by using a minimum display area to avoid interference to the driver. In a possible design, a display area of the cockpit display screen may be adjusted by adjusting a display height of the cockpit display screen.

According to the invention, the method further includes: controlling, in response to a user operation of switching the vehicle to a self-driving state, the cockpit display screen to present a second display state (a wide screen), where a screen height of the cockpit display screen in the second display state is a second height, and the second height is greater than the first height.

After the user switches the vehicle to the self-driving state, the driver may implement more functions by using the cockpit display screen, for example, watching a movie, playing a game, or observing information in a larger range around the vehicle. In this case, in the cockpit display screen control method provided in this embodiment of this application, the cockpit display screen is controlled to present the second display state, and a display area of the second display state is greater than a display area of the first display state. In a possible design, the cockpit display screen is raised to switch the cockpit display screen from the first display state to the second display state.

According to the cockpit display screen control method provided in this embodiment of this application, when a driving status of the vehicle is switched, a display status of the cockpit display screen is automatically switched, to meet a requirement of the user for reducing interference caused by the screen to safe driving in the manual driving state, and meet a requirement of the user for implementing more entertainment functions by using a larger screen during self-driving.

In a possible implementation, the cockpit display screen may further present a third display state, a screen height of the cockpit display screen in the third display state is a third height, and the third height is greater than the second height.

When the vehicle is in the self-driving state or the parking state, the user may further raise the cockpit display screen to expand a display area of the cockpit display screen, to implement a function of a vehicle-mounted cinema or a vehicle-mounted game center, so that user experience is further improved.

When the vehicle is in the self-driving state or the parking state, there may be more diversified control manners for the cockpit display screen. For example, the cockpit display screen may be controlled by using a user operation, or may be controlled based on an application that is run or to be run on the screen or an application type.

In another possible implementation, the method further includes: when the vehicle is in the self-driving state or the parking state, switching, in response to a display status switching operation of the user, the cockpit display screen to a display state specified by the user, where the display state specified by the user includes the first display state, the second display state, or the third display state.

When the vehicle is in the self-driving state or the parking state, in addition to increasing the area of the cockpit display screen to meet more entertainment requirements of the user, the user may also randomly switch the display status of the cockpit display screen by interacting with the screen, to increase or reduce the display area of the cockpit display screen. An interaction manner between the user and the screen includes but is not limited to the following manners: touching, an air gesture, voice, hardware control, eye control, and the like.

In another possible implementation, the method further includes: when the vehicle is in the self-driving state or the parking state, adjusting a display status of the cockpit display screen based on a correspondence between a first application and the display status in response to a user operation of running the first application, where the display status includes the first display state, the second display state, or the third display state.

In a possible implementation, when the vehicle is in the self-driving state or the parking state, the display status of the cockpit display screen may be adjusted based on a type of the first application that is currently being run on the screen or a type of a first application that is to be run and that is selected by the user. For example, an application of a video playback type corresponds to the third display state.

In another possible implementation, when the vehicle is in the self-driving state or the parking state, the first application may directly correspond to the display status of the cockpit display screen. For example, a video player application corresponds to the third display state.

When the vehicle is in the manual driving state, the cockpit display screen is always in the first display state, and the display status does not change with a running application or an application type, to implement safe driving.

In a possible implementation, switching of the vehicle between different states is triggered by a user operation. In other words, the vehicle is switched from one state such as the self-driving state to another state such as the manual driving state in response to the user operation.

An embodiment of this application further provides a cockpit display screen display method, used in a cockpit display screen in a vehicle, and the vehicle has a self-driving function. The method includes: The cockpit display screen displays a first interface in response to a user operation of switching the vehicle to a manual driving state, where the first interface includes an icon of a first application.

Once a user switches the vehicle to the manual driving state, the cockpit display screen presents the first interface in a slender state. In this case, a display area is small, and an application in the interface is displayed in a form of an icon. During use, an interaction control of the application is displayed only after an icon of the application is tapped first. In this display method, in one aspect, the display area can be reduced, to reduce interference caused by light emitted by the cockpit display screen to a driver, and in another aspect, the driver can also be prevented from accidentally touching the interaction control of the application.

Based on the cockpit display screen display method provided in the second aspect, the method further includes: The cockpit display screen displays a second interface in response to a user operation of switching the vehicle to a self-driving state, where the second interface includes a first card, the first card corresponds to the first application, and a display area of the second interface is greater than a display area of the first interface.

When the user switches the vehicle to the self-driving state, the cockpit display screen presents the second interface in a wide-screen state, and the display area of the second interface is greater than that of the first interface. Therefore, the first application displayed in the form of an icon in the first interface may be displayed in the second interface in a form of a card. When the first application is displayed in the form of a card, more important information and/or interaction controls may be displayed in a card area.

In a possible implementation, the first card further displays information related to the first application. The information related to the first application may be latest content pushed by the first application, version update information of the first application, or other content that is set by the user and that is displayed by the first application.

In a possible implementation, the first card further displays an interaction control of the first application. When using the first application, the user may directly operate the interaction control in a first card area without first entering an interface of the first application. For example, when the first application is a music player, the user may directly operate the interaction control on the first card to play/pause a song or play a previous/next song.

In a possible implementation, the second interface may further present more instrument information and/or clearer driving information such as navigation or a surrounding environment than the first interface. In this case, the user can more accurately learn a driving status of the vehicle.

When the vehicle is switched to the self-driving state, the cockpit display screen presents the second interface with a larger display area, and the second interface may display more content and include more application information and interaction controls, more and clearer driving information, and the like, so that the user can operate the cockpit display screen more conveniently in the self-driving state to meet a higher entertainment requirement, or can more accurately learn the driving status of the vehicle.

In a possible implementation, the method further includes: When the vehicle is in the self-driving state or a parking state, the cockpit display screen may further present a third interface, where a display area of the third interface is greater than a display area of the second interface.

When the vehicle is in the self-driving state or the parking state, the cockpit display screen may further expand a display area, and present the third interface in a full-screen form, so that the user can enjoy a vehicle-mounted cinema or a vehicle-mounted game center.

In a possible implementation, the method further includes: When the vehicle is in the self-driving state or the parking state, in response to a display interface switching operation of the user, the cockpit display screen may present a display interface specified by the user, where the display interface specified by the user includes the first interface, the second interface, or the third interface.

When the vehicle is in the self-driving state or the parking state, the user may randomly switch the display interface. The user operation may be screen touching, an air gesture, a voice indication, hardware pressing, eye control, or the like.

In a possible implementation, the method further includes: when the vehicle is in the self-driving state or the parking state, adjusting a display interface of the cockpit display screen in response to a user operation of running the first application, so that an adjusted display area of the display interface adapts to the first application.

Different applications or application types are suitable for display of screens of different sizes. For example, for an audio-type application, a slender screen is used for display, but for a video-type application, user experience is better when a larger screen is used for display. When the vehicle is in the self-driving state or the parking state, there is no need to consider interference caused by a screen size to a line of sight of the driver. The display interface of the cockpit display screen may be adjusted based on a correspondence between an application or an application type and a display area of the cockpit display screen, so that the screen size adapts to the application, and user experience is improved.

In a possible implementation, a correspondence between the first application and the display area of the cockpit display screen is written by a developer of the first application into an application attribute, and a processing module obtains the correspondence from application attribute information, so that a corresponding screen size may be determined.

In another possible implementation, a correspondence between the first application or the application type of the first application and the display area of the cockpit display screen may also be stored in a storage module of the vehicle, and may be obtained by the processing module.

According to a third not claimed aspect, an embodiment of this application provides a display controller, including a communication interface and a control circuit. The communication interface is configured to receive a first status indication signal, and the first status indication signal indicates to switch a vehicle to a manual driving state. The control circuit is configured to generate a first control signal in response to the first status signal. The first control signal is used to control to switch a cockpit display screen of the vehicle from a current display state to a first display state, a screen height of the cockpit display screen in the first display state is a first height, and the first height is different from a screen height of the cockpit display screen in the current display state.

In a possible implementation, the communication interface is further configured to receive a second status indication signal, and the second status indication signal indicates to switch the vehicle to a self-driving state. The control circuit is further configured to generate a second control signal. The second control signal is used to control the cockpit display screen to present a second display state, a screen height of the cockpit display screen in the second display state is a second height, and the second height is greater than the first height.

In a possible implementation, the cockpit display screen may further present a third display state, a screen height of the cockpit display screen in the third display state is a third height, and the third height is greater than the second height.

In a possible implementation, the communication interface is further configured to: when the vehicle is in the self-driving state or a parking state, receive an operation signal triggered by a user operation; and the control circuit is further configured to generate a third control signal in response to the operation signal. The third control signal is used to switch the cockpit display screen to a display state specified by a user, and the display state specified by the user is one of the first display state, the second display state, and the third display state.

According to the invention, the first control signal is a first display screen control signal, and the first display screen control signal is used to control the raising/lowering mechanism to perform a lowering operation, to reduce the screen height of the cockpit display screen.

According to the invention, the second control signal is a second display screen control signal, and the second display screen control signal is used to control the raising/lowering mechanism to perform a raising operation, to increase the screen height of the cockpit display screen.

According to a fourth aspect according to the invention, the invention also provides a cockpit display screen control apparatus, including: a detection unit, configured to detect a status of a vehicle, where the status includes a manual driving state, a self-driving state, or a parking state; and a control unit, configured to control to switch a cockpit display screen of the vehicle from a current display state to a first display state in response to switching of the vehicle to the manual driving state, where a screen height of the cockpit display screen in the first display state is a first height, and the first height is different from a screen height of the cockpit display screen in the current display state.

In a possible implementation, the control unit is further configured to control, in response to switching of the vehicle to the self-driving state, the cockpit display screen to present a second display state. A screen height of the cockpit display screen in the second display state is a second height, and the second height is greater than the first height.

In a possible implementation, the cockpit display screen may further present a third display state, a screen height of the cockpit display screen in the third display state is a third height, and the third height is greater than the second height.

In a possible implementation, the control unit is further configured to: when the vehicle is in the self-driving state or a parking state, switch, in response to a display status switching operation of a user, the cockpit display screen to a display state specified by the user. The display state specified by the user is one of the first display state, the second display state, and the third display state.

In a possible implementation, the control unit is further configured to: when the vehicle is in the self-driving state or the parking state, switch the cockpit display screen to a display state corresponding to a first application in response to a user operation of running the first application. The first application corresponds to one of the first display state, the second display state, and the third display state.

According to the invention, the control unit is specifically configured to: generate a display screen control signal; and send the display screen control signal to a raising/lowering mechanism. The display screen control signal is used to control the raising/lowering mechanism to perform a raising/lowering operation, to adjust the screen height of the cockpit display screen.

According to a fifth not claimed aspect, an embodiment of this application provides an intelligent cockpit, including a cockpit display screen and the cockpit display screen control apparatus described in the fourth aspect or any possible implementation of the fourth aspect. The cockpit display screen control apparatus is configured to control a display status of the cockpit display screen.

According to a sixth not claimed aspect, an embodiment of this application provides a cockpit display apparatus, including a cockpit display screen and a processing module. The processing module is configured to control to switch the cockpit display screen from a current display state to a first display state in response to switching of a vehicle to a manual driving state. A screen height of the cockpit display screen in the first display state is a first height, and the first height is different from a screen height of the cockpit display screen in the current display state.

In a possible implementation, the processing module is further configured to control, in response to switching of the vehicle to a self-driving state, the cockpit display screen to present a second display state. A screen height of the cockpit display screen in the second display state is a second height, and the second height is greater than the first height.

In a possible implementation, the cockpit display screen may further present a third display state, a screen height of the cockpit display screen in the third display state is a third height, and the third height is greater than the second height.

According to a seventh not claimed aspect, an embodiment of this application provides a vehicle, including: a detection system, configured to detect a driving status of the vehicle; and the cockpit display apparatus according to the sixth aspect, where the cockpit display apparatus is configured to control a display status of a cockpit display screen based on the driving status of the vehicle.

In a possible implementation, the vehicle further includes a communication system, and the communication system is configured to implement communication between an intelligent cockpit and another module in the vehicle, and/or is configured to implement communication between components in the intelligent cockpit.

According to an eighth aspect of the invention, the invention also provides a computer-readable storage medium. The computer-readable storage medium stores a computer program or instructions, and when the computer program or the instructions are executed by a processor, the cockpit display screen control method according to the first aspect or any possible implementation of the first aspect is implemented.

According to a ninth not claimed aspect, an embodiment of this application provides a computer-readable storage medium. The computer-readable storage medium stores a computer program or instructions, and when the computer program or the instructions are executed by a processor, the cockpit display screen display method according to the second aspect or any possible implementation of the second aspect is implemented.

According to a tenth not claimed aspect, an embodiment of this application provides a computer program product. The computer program product includes a computer program or instructions. When the computer program or the instructions are executed by a processor, the cockpit display screen control method according to the first aspect or any possible implementation of the first aspect is implemented.

According to an eleventh not claimed aspect, an embodiment of this application provides a computer program product. The computer program product includes a computer program or instructions, and when the computer program or the instructions are executed by a processor, the cockpit display screen display method according to the second aspect or any possible implementation of the second aspect is implemented.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### BRIEF DESCRIPTION OF DRAWINGS

FIG. 1 is a schematic diagram of an application scenario according to an embodiment of this application;
FIG. 2 is a schematic diagram of a solution according to an embodiment of this application;
FIG. 3 is a schematic diagram of another solution according to an embodiment of this application;
FIG. 4 is a diagram of an architecture of a terminal device according to an embodiment of this application;
FIG. 5 is a schematic diagram of a structure of a raising/lowering mechanism according to an embodiment of this application;
FIG. 6a is a schematic flowchart of controlling a height of a cockpit display screen according to an embodiment of this application;
FIG. 6b is another schematic flowchart of controlling a height of a cockpit display screen according to an embodiment of this application;
FIG. 6c is another schematic flowchart of controlling a height of a cockpit display screen according to an embodiment of this application;
FIG. 7 is a schematic diagram of display of a cockpit display screen in different areas according to an embodiment of this application;
FIG. 8 is a schematic diagram in which a display status of a cockpit display screen changes with a driving status according to an embodiment of this application;
FIG. 9 is a schematic diagram of comparison between display interfaces of a cockpit display screen that is switched from a slender-screen state to a wide-screen state according to an embodiment of this application;
FIG. 10 is a schematic diagram of a group of display interfaces of a cockpit display screen in a wide-screen state according to an embodiment of this application;
FIG. 11 is a schematic diagram of another group of display interfaces of a cockpit display screen in a wide-screen state according to an embodiment of this application;
FIG. 12A and FIG. 12B are a schematic diagram of playing a movie in an ultra-large screen state by a user through an interaction operation according to an embodiment of this application;
FIG. 13 is a schematic diagram of reducing a display area of a cockpit display screen by a user through an interaction operation according to an embodiment of this application;
FIG. 14 is a schematic diagram of expanding a display area of a cockpit display screen by a user through an interaction operation according to an embodiment of this application;
FIG. 15 is another schematic diagram in which a display status of a cockpit display screen changes with a driving status according to an embodiment of this application;
FIG. 16 is a schematic diagram of a structure of a display controller according to an embodiment of this application;
FIG. 17 is a schematic diagram of a cockpit display screen control apparatus according to an embodiment of this application;
FIG. 18 is a schematic diagram of a cockpit display apparatus according to an embodiment of this application; and
FIG. 19 is a schematic diagram of a structure of a terminal device according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application. In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In the descriptions in embodiments of this application, "a plurality of" means two or more unless otherwise specified. In addition, unless otherwise specified, the terms "first" and "second" are merely intended for the purpose of description, and shall not be understood as an indication or implication of relative importance or an implicit indication of a quantity of indicated technical features. Therefore, unless otherwise specified, a feature limited by "first" or "second" may explicitly or implicitly include one or more features.

It should be understood that an interaction operation between a user and a cockpit display screen described in embodiments of this application includes but is not limited to the following manners: touching, an air gesture, voice, hardware control, eye control, and the like.

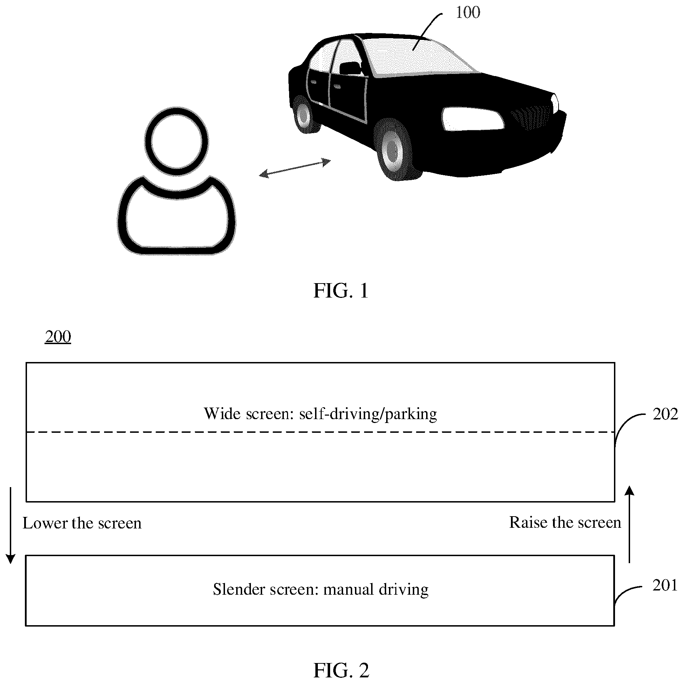

FIG. 1 shows an application scenario of an embodiment of this application. As shown in FIG. 1, this application is applied to a transportation means such as a vehicle. A vehicle 100 is equipped with a self-driving system, and can be switched between a self-driving state and a manual driving state in response to a user operation. A cockpit display screen is disposed in the vehicle. A display status (the display status includes a screen form, a display area, a display interface, and the like) of the cockpit display screen may change with a driving status of the vehicle. Alternatively, the cockpit display screen can directly change the display status in response to an interaction operation such as a hardware operation or touching of the user.

A driving status of a vehicle with a self-driving function may be classified into three types: a manual driving state, that is, a driver manually drives the vehicle; a self-driving state, that is, the vehicle is driven by a self-driving system of the vehicle through automatic control; and a parking state, where the parking state mentioned in embodiments of this application means that the vehicle is not stalled but is in a still state, and in this case, the cockpit display screen is not turned off, and a user may adjust the display status of the cockpit display screen.

In different driving states, the user has different display requirements for the cockpit display screen. When the user manually drives the vehicle 100, the user needs to focus on a driving event, and interference from another event needs to be reduced as much as possible. Light and/or corresponding sound emitted by the cockpit display screen distract/distracts attention of the driver, and the light and/or the corresponding sound emitted by the cockpit display screen need/needs to be reduced as much as possible to reduce a driving risk. However, when the vehicle 100 is in the self-driving state or the parking state, the driver does not need to focus on driving the vehicle. In this case, the user in the vehicle may have more entertainment requirements, for example, playing a movie or television series or playing a game. It should be understood that an audio circuit that makes the foregoing corresponding sound may be built in the cockpit display screen, or may be disposed outside the cockpit display screen, provided that the audio circuit can make the corresponding sound in cooperation with content displayed on the cockpit display screen.

In view of this, embodiments of this application provide a cockpit display screen adaptive to a driving status, so that when a vehicle is in a manual driving state, an area of the cockpit display screen is minimum, and interference to a driver is reduced, but when the vehicle is in another driving state, an area of the cockpit display screen may be expanded, to meet diversified multimedia entertainment requirements of a user.

It should be understood that the cockpit display screen is configured to display information entered by the user or information presented to the user, and may be implemented in a form of a liquid crystal display, an organic light-emitting diode (organic light-emitting diode, OLED), or the like. The cockpit display screen provided in embodiments of this application may be a complete large screen, or may be a large screen formed by combining a plurality of small screens.

In a possible implementation, the cockpit display screen is configured as a flexible screen that can be folded and/or bent.

In another possible implementation, in the manual driving state, an area of the cockpit display screen is minimum, and is implemented by a physical screen; and when the vehicle is in another driving state such as self-driving, a display area of the cockpit display screen may be expanded by using a virtual screen, an air display screen, or the like.

Optionally, the cockpit display screen may be further covered with a touchscreen. After detecting a touch event, the touchscreen transmits the touch event to a processor to determine a type of the touch event. Then, the processor may provide corresponding visual output on the cockpit display screen based on the type of the touch event. The touchscreen may be integrated with the cockpit display screen to implement input and output functions. In addition, the cockpit display screen may be configured in a full-panel form, to implement a frameless structure.

FIG. 2 shows a possible solution according to an embodiment of this application. As shown in FIG. 2, a cockpit display screen 200 has two different display states that are separately corresponding to different driving states of a vehicle. The screen has different sizes in different states.

Slender screen 201 (a first display state): In a manual driving state, a driver can observe basic driving information by using a small screen, and a length of the screen can also ensure that sufficient information is displayed. In this case, a height of the screen is low, so that a line of sight in front of the driver can be prevented from being blocked, and an amount of light emitted by the screen can be reduced.

Wide screen 202 (a second display state): In a self-driving state, the driver pays more attention to not only information in front of the vehicle, but also surrounding environment information of the vehicle. This is difficult to be implemented through naked eye observation of the user. Surrounding information is collected by using a sensor, and is presented on the screen in a form of an image. The driver performs observation from the God's perspective, so that surrounding environment information of the vehicle can be more conveniently mastered, and a larger screen is more conducive to observation. Alternatively, in the self-driving state, the user may implement an entertainment requirement such as watching a movie by using the wide screen 202. In a parking state, the user may also enable the second display state of the screen, and implement more multimedia entertainment operations by using the wide screen 202, for example, watching a movie or playing a game.

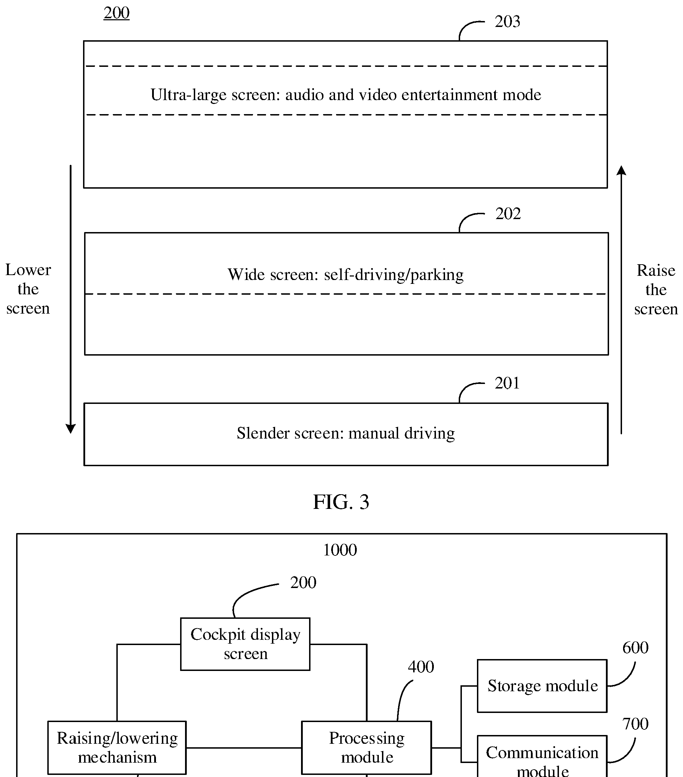

FIG. 3 shows a further solution according to an embodiment of this application. As shown in FIG. 3, a cockpit display screen 200 may further support raising/lowering of more levels, to implement an ultra-large screen 203 (a third display state), so that an audio and video entertainment effect is enhanced. For example, in a self-driving state or a parking state, the cockpit display screen is a wide screen 202, and an entertainment operation such as watching a movie may be implemented. After a full screen is indicated through interaction, the movie is played in full screen in a state of the wide screen 202. A user may perform a full-screen or screen raising operation again, to trigger a screen raising action of the cockpit display screen again. The cockpit display screen is expanded to the ultra-large screen 203 again, enters an audio and video entertainment mode, and performs full-screen display on the ultra-large screen 203.

In a possible implementation, if the vehicle is stopped and stalled, the cockpit display screen 200 returns to a first display state (a slender screen 201), and the screen is turned off.

In an embodiment, the cockpit display screen that is provided in this application and whose display status can be adjusted may be used in a terminal device 1000 shown in FIG. 4. The terminal device 1000 may be a transportation means such as a vehicle. As shown in FIG. 4, the terminal device 1000 includes a processing module 400, a cockpit display screen 200, a self-driving system 500, a storage module 600, and a communication module 700.

The processing module 400 is a control center of the terminal device 1000, and may control and adjust a display status of the cockpit display screen 200. The processing module 400 includes at least one processor, and the processor may be a single-core processor or a multi-core processor. For example, the processor includes but is not limited to various processors based on an architecture such as x86 or ARM, such as an Intel Core processor series. The processor may interact with another component in the terminal device 1000 by using various interfaces, a support circuit, and a bus, and the support circuit may be integrated with the processor.

The cockpit display screen 200 may be configured to display various instrument information, surrounding environment information collected by a sensor, a movie and television series, a game interface, and the like. The cockpit display screen 200 may be a touchscreen, and the user may perform an interaction operation on the cockpit display screen; or the cockpit display screen 200 may be a screen that supports a non-touch operation. In this case, the user may interact with a display screen in a manner such as voice, an air gesture, an eyeball, or other auxiliary hardware.

The cockpit display screen provided in this embodiment of this application is used in a vehicle with a self-driving function, and the self-driving system 500 is used to control and/or implement self-driving of a vehicle 100. For example, the self-driving system 500 may sense a traffic condition by invoking a sensor such as a camera or a radar of the vehicle, and control, based on stipulations in a traffic rule, the vehicle to perform an action such as advancing, reversing, making a turn, making a U-turn, or changing lanes.

The storage module 600 is configured to store a computer program and data. The storage module 600 may include a non-transitory computer-readable storage medium (non-transitory computer-readable storage medium), for example, a magnetic storage device (for example, a hard disk, a floppy disk, or a magnetic strip), an optical storage medium (for example, a digital versatile disc (digital versatile disc ,DVD)), a smart card, a flash memory device, a random access memory (random access memory ,RAM), a read-only memory (read-only memory ,ROM), a programmable ROM (programmable ROM ,PROM), an erasable PROM (erasable PROM ,EPROM), a register, and any combination thereof. The storage module 600 may be coupled to the processing module 400, so that the processing module 400 may read information and write the information to the storage module 600. Specifically, the storage module 600 may be integrated into the processing module 400, or the storage module 600 and the processing module 400 may be separated. The storage module 600 may store a computer program. When the computer program is executed by the processing module 400, a cockpit display screen control method and/or display method provided in the following embodiments of this application may be implemented.

The communication module 700 is used for communication between functional units of the terminal device 1000, and the communication module 700 may also include any apparatus such as a transceiver configured to perform wired and/or wireless communication with another device or a communication network. The communication module 700 may include a wired communication module and/or a wireless communication module. The wired communication module may include a serial and/or parallel wired medium, for example, an Ethernet, a universal serial bus (universal serial bus, USB), a fire wire (fire wire, FireWire), a digital video interface (digital video interface, DVI), a high-definition multimedia interface (high-definition multimedia interface, HDMI), or a video graphics array (video graphics array, VGA) interface. The wireless communication module may include a wireless communication solution such as a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication solution may further include a mobile communication manner such as 2G/3G/4G/5G. A mobile communication module that provides the mobile communication manner may include at least one filter, a switch, a power amplifier, a low noise amplifier (low noise amplifier, LNA), and the like. A wireless communication module that provides a wireless communication function may be one or more components integrated with at least one communication processing module. In some embodiments, at least some function modules in the wireless communication module may be disposed in the processing module 400. In some embodiments, at least some function modules of the wireless communication module and at least some modules of the processing module 400 may be disposed in a same component. The wireless communication module receives an electromagnetic wave through an antenna, performs demodulation and filtering processing on the electromagnetic wave signal, and sends a processed signal to the processing module 400. The wireless communication module may further receive a to-be-sent signal from the processing module 400, perform frequency modulation and amplification on the to-be-sent signal, and convert the signal into an electromagnetic wave through the antenna for radiation.

Optionally, the terminal device 1000 is further configured with a raising/lowering mechanism 300, configured to raise or lower the cockpit display screen 200. The raising/lowering mechanism 300 is physically connected to the cockpit display screen 200, and drives, under the control of the processing module 400, the cockpit display screen 200 to be physically raised or lowered, to adjust a display status of the cockpit display screen 200, so that an effect that the cockpit display screen 200 adapts to the driving status is implemented.

It should be understood that these functional units may be implemented by software, or may be implemented by hardware such as a processor, or may be implemented by a proper combination of software, hardware, and/or firmware. For example, some functions are implemented by an application processor by executing a computer program, and some functions are implemented by a wireless communication module (such as a Bluetooth module or a Wi-Fi module), an MCU, or the like.

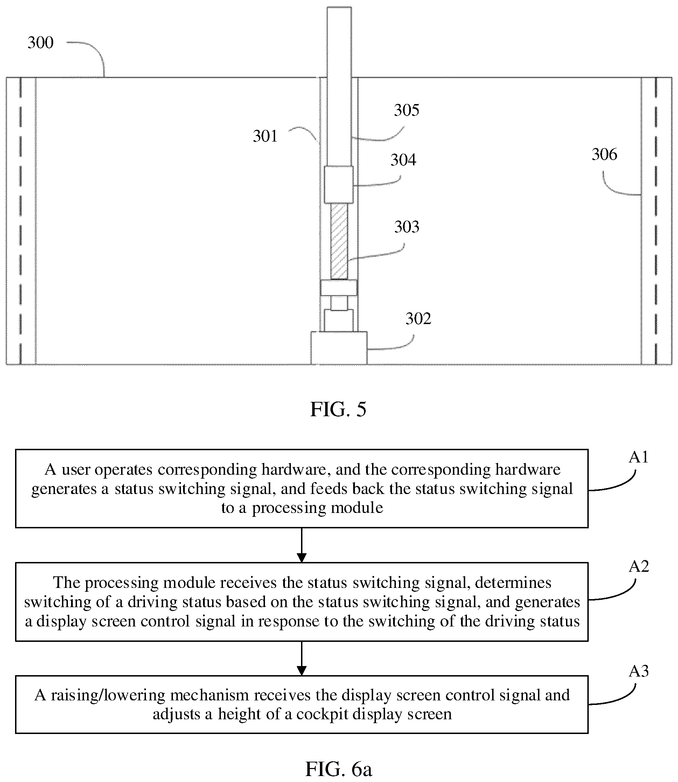

FIG. 5 is a schematic diagram of a possible structure of the raising/lowering mechanism 300. As shown in FIG. 5, there is a single-axis motor 302 at a middle position at the bottom of the raising/lowering mechanism 300, configured to provide power for raising/lowering the screen. An output shaft of the single-axis motor 302 is connected to a screw rod 303 through transmission. A mounting block 304 is sleeved on the screw rod 303 by using threads, a pillar 305 is fixedly connected on the mounting block 304, and the pillar 305 may be connected to the cockpit display screen 200 by using a structure such as a pin-jointed base. When a display status of the cockpit display screen 200 needs to be switched, the processing module 400 sends an indication signal, to indicate the raising/lowering mechanism 300 to adjust a height of the cockpit display screen 200. The single-axis motor 302 is started and the screw rod 303 is driven to rotate. The mounting block 304 may move upward or downward. The mounting block 304 drives the pillar 305 to ascend or descend, and the pillar 305 drives the cockpit display screen 200 to ascend or descend.

Optionally, a pipeline 301 is disposed in the middle of the raising/lowering mechanism 300, and is configured to accommodate an output shaft of the motor 302, the screw rod 303, the mounting block 304, and the pillar 305, to prevent the pillar 305 from shaking in an ascending/descending process. Further, left and right sides of the raising/lowering mechanism 300 may further include a pipeline 306 that is coupled to pillars connected to left and right sides of the cockpit display screen 200, to prevent the screen from shaking left and right in an ascending/descending process. Similarly, in the pipeline 306, a motor may also be used to drive the pillar to ascend/descend, to provide more sufficient and stable power for raising/lowering the cockpit display screen 200.

It should be understood that the raising/lowering mechanism 300 provided in the embodiment related to FIG. 5 is only a possible implementation of the raising/lowering mechanism 300, and the raising/lowering mechanism 300 may alternatively be implemented based on another existing or future screen raising/lowering apparatus.

FIG. 6a is a schematic flowchart of controlling the height of the cockpit display screen 200 according to an embodiment of this application. As shown in FIG. 6a, the user may switch a driving status of the vehicle by operating hardware. As the driving status of the vehicle changes, a display status of the cockpit display screen 200 is automatically switched.

A1: The user operates corresponding hardware, and the corresponding hardware generates a driving status switching signal, and feeds back the driving status switching signal to the processing module 400. In a possible implementation, the user may switch the driving status of the vehicle between self-driving and manual driving by using a group of hardware operations. The corresponding hardware may be original hardware such as a brake, a pedal, and a gear; may be hardware that is newly disposed for a driving status switching function, for example, a button, a switch, or a joystick that is newly disposed on a steering wheel; or may be a combination of at least one piece of original vehicle hardware and at least one piece of newly disposed hardware. When switching the driving status, the user operates the corresponding hardware by using a group of actions. The driving status switching signal is generated after the foregoing user operation, to indicate the processing module 400 to switch the driving status.

A2: The processing module 400 receives the driving status switching signal, determines switching of the driving status based on the driving status switching signal, and generates a display screen control signal in response to the switching of the driving status. The processing module 400 receives the driving status switching signal, and after parsing the driving status switching signal, switches the driving status to a driving state specified by the user. The processing module 400 generates a display screen control signal when or after controlling to switch the driving status, to control raising/lowering of the cockpit display screen 200.

If the user indicates to switch the vehicle to the manual driving state, the cockpit display screen 200 is controlled to present the first display state (the slender screen 201). In a possible implementation, if the cockpit display screen 200 is in the first display state (the slender screen 201) before the driving status is switched, in response to the switching of the driving status, the processing module 400 does not generate the display screen control signal, or the display screen control signal generated by the processing module 400 is intercepted, or the raising/lowering mechanism 300 does not respond to the display screen control signal. In a possible implementation, if the cockpit display screen 200 is not in the first display state (the slender screen 201) before the driving status is switched, the processing module 400 generates the display screen control signal in response to the switching of the driving status, and controls to lower the cockpit display screen 200 to return to the first display state (the slender screen 201).

If the user indicates to switch the vehicle to the self-driving state, the cockpit display screen 200 is controlled to present the second display state (the wide screen 202). Specifically, in response to the switching of the driving status, the processing module 400 generates the display screen control signal based on a screen display state that is presented before the driving status is switched, to indicate to ascend or descend the cockpit display screen 200 to the second display state (the wide screen 202). In a possible implementation, if the cockpit display screen 200 is in the second display state (the wide screen 202) before the vehicle is switched to the self-driving state, in response to the switching of the driving status, the processing module 400 does not generate the display screen control signal, or the display screen control signal generated by the processing module 400 is intercepted, or the raising/lowering mechanism 300 does not respond to the display screen control signal.

If the user indicates to switch the vehicle to the parking state, that is, the vehicle is stopped but not stalled, in an embodiment, in response to the switching of the driving status, the processing module 400 does not generate the display screen control signal, and the cockpit display screen 200 still maintains an original display state unless another indication of the user is received. In another embodiment, when the user indicates to switch the vehicle to the parking state, the processing module 400 generates different display screen control signals based on whether a parking brake (parking brake)/emergency brake (emergency brake) of the vehicle is working. For example, when the user indicates to switch the vehicle to the parking state and the parking brake of the vehicle is working, the processing module 400 generates a screen raising signal, and controls to expand a display area of the cockpit display screen 200 to a maximum display area (the wide screen 202 or the ultra-large screen 203); or when the user indicates to switch the vehicle to the parking state and the parking brake of the vehicle is not working, the processing module 400 generates a screen lowering signal, and controls to reduce the display area of the cockpit display screen 200 to a minimum display area (the slender screen 201).

A3: The raising/lowering mechanism 300 receives the display screen control signal, and adjusts the height of the cockpit display screen 200. After the processing module 400 sends the display screen control signal to the raising/lowering mechanism 300, the raising/lowering mechanism 300 performs a raising/lowering operation according to a corresponding instruction to raise the cockpit display screen 200 to expand the display area or lower the cockpit display screen 200 to reduce the display area; or if the display screen control signal indicates that an expected state of the cockpit display screen 200 is a current state of the cockpit display screen 200, the raising/lowering mechanism 300 does not respond to the display screen control signal.

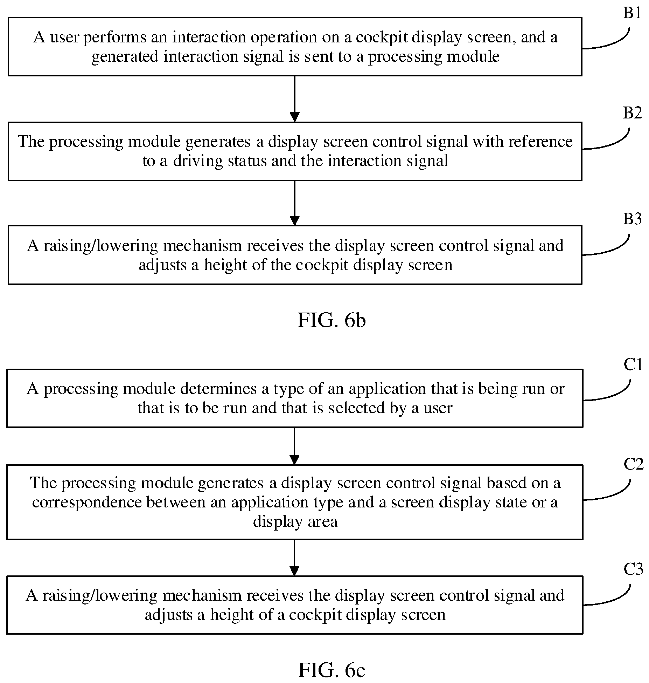

In addition to adjusting the height of the cockpit display screen 200 by using hardware, the height of the cockpit display screen 200 may alternatively be adjusted by using an interaction operation at a software layer. FIG. 6b is a schematic flowchart of adjusting the height of the cockpit display screen 200 by using an interaction operation according to an embodiment of this application.

As shown in FIG. 6b, in a possible implementation, when the vehicle is in the self-driving state or the parking state, the user may manually interact with the cockpit display screen 200, to switch the display status of the cockpit display screen 200.

B1: The user interacts with the cockpit display screen 200, and a generated interaction signal is sent to the processing module 400. When the user interacts with the cockpit display screen 200, an interaction signal is generated, and the interaction signal is transmitted to the processing module 400 for parsing. It should be understood that an interaction manner between the user and the cockpit display screen includes but is not limited to the following manners: touching, an air gesture, voice, hardware control, eye/eyeball control, and the like.

In a self-driving or parking process, if the user does not want a front line of sight to be blocked, the user may perform an interaction operation on the cockpit display screen 200, to reduce the height of the cockpit display screen 200, that is, perform a screen lowering operation. After the screen is lowered, the user may perform an interaction operation such as touching to raise the screen, that is, increase the height of the cockpit display screen 200. An interaction operation, such as touching, that indicates to adjust the height of the cockpit display screen 200 does not lead to switching of the driving status of the vehicle.

In the self-driving state or the parking state, the user may adjust the cockpit display screen 200 to a specified display state by interacting with the cockpit display screen 200, for example, adjust the cockpit display screen 200 from the second display state (the wide screen 202) or the third display state (the ultra-large screen 203) to the first display state (the slender screen 201), to avoid blocking a front line of sight; or adjust the cockpit display screen 200 from the first display state (the slender screen 201) to the second display state (the wide screen 202) to display a clearer surrounding environment and more instrument information or perform an entertainment operation such as playing a movie or playing a game; or adjust the cockpit display screen 200 from the third display state (the ultra-large screen 203) to the second display state (the wide screen 202), to meet a requirement of the user for selecting new playback content; or further adjust the cockpit display screen 200 from the second display state (the wide screen 202) to the third display state (the ultra-large screen 203), to meet more and richer entertainment requirements.

B2: The processing module 400 generates a display screen control signal with reference to the driving status and the interaction signal.

After receiving the interaction signal, the processing module 400 does not immediately respond to the interaction signal to send an instruction for adjusting the display status of the cockpit display screen 200, but determines, with reference to the driving status of the vehicle, whether to send a related instruction. When the driving status does not meet a related condition, the processing module 400 does not generate an instruction for adjusting a screen size, or the instruction is intercepted, or the raising/lowering mechanism 300 does not respond to the instruction.

In the self-driving state or the parking state, the user does not need to worry about impact exerted on the driver by light emitted by the cockpit display screen 200 and/or sound generated when related content is played. The user may adjust the cockpit display screen 200 to any specified state. The specified state may be any one of the first display state (the slender screen 201), the second display state (the wide screen 202), and the third display state (the ultra-large screen 203), or may be, when the cockpit display screen 200 supports more display states, any other display state supported by the cockpit display screen 200.

In the manual driving state, to avoid interference caused to the driver by light emitted by the cockpit display screen 200 and/or sound generated when related content is played, a system limits the cockpit display screen 200 to be only in the first display state (the slender screen 201). If the user indicates to raise the screen, the processing module 400 does not send the display screen control signal, or the display screen control signal sent by the processing module 400 is intercepted, or the raising/lowering mechanism 300 does not respond to the display screen control signal. Optionally, in this case, the vehicle may further send a prompt to remind the user that the vehicle is currently in the manual driving state and the screen cannot be raised, and to indicate the user to pay attention to safe driving. The prompt may be a text prompt displayed on the cockpit display screen 200 and/or a voice prompt sent by using an audio circuit of the vehicle.

B3: The raising/lowering mechanism 300 receives the display screen control signal, and adjusts the height of the cockpit display screen 200. After the processing module 400 sends the display screen control signal to the raising/lowering mechanism 300, the raising/lowering mechanism 300 starts the motor 302 according to the foregoing instruction to perform a raising/lowering operation, and raises the cockpit display screen 200 to expand a display area, or lowers the cockpit display screen 200 to reduce a display area.

In addition, different types of applications are usually applicable to display by using screens of different sizes. For example, an application that does not require the user to stare at for a long time, such as music playing, is displayed by using a small screen, and an application that requires the user to stare at for a long time, such as video playing, is displayed by using a large screen.

In view of this, an embodiment of this application provides another method for controlling the height of the cockpit display screen 200. When the vehicle is in the self-driving state or the parking state, as shown in FIG. 6c, in a possible implementation, the processing module 400 may adjust the display status of the cockpit display screen 200 based on a type of an application that is currently run on the screen or a type of an application that is to be run and that is selected by the user. When the vehicle is in the manual driving state, the cockpit display screen 200 is always in the first display state (the slender screen 201), and the display status does not change with a type of a running application. Alternatively, in this case, running of a related type of an application such as movie or TV series playing that may seriously interfere with the driver is not supported.

C1: The processing module 400 determines a type of an application that is being run or an application that is to be run and that is selected by the user. An application type may be obtained from an application label in AppGallery, and each application downloaded from an application store (App Store, AppGallery, or the like) has a category of the application.

C2: The processing module 400 generates a display screen control signal based on a correspondence between an application type and a screen display state.

In a possible implementation, a correspondence between a specific application type and a screen display status may be pre-stored in the storage module of the vehicle. The processing module 400 determines a corresponding screen display state based on the correspondence and the type of the application that is being run or that is to be run, and generates the display screen control signal. In a possible implementation, if the screen display state corresponding to the type of the application that is being run or that is to be run is a current display state of the cockpit display screen 200, the processing module 400 does not generate the display screen control signal, or the screen control signal is intercepted, or the raising/lowering mechanism 300 does not respond to the screen control signal.

In an embodiment, a correspondence between some application types and a screen display state is shown in the following table.

| Application type | Screen display state |
|---|---|
| Video-type application | Third display state (an ultra-large screen 203) |
| Audio-type application | First display state (a slender screen 201) |
| Control-type application | First display state (a slender screen 201) |

The application type may include a video-type application (for example, a video playback application, a video call application, or a video conference application), an audio-type application (for example, a music playback application, a book listening application, or a broadcast listening application), a control-type application (for example, an air conditioner control application or a light control application), and the like. For the video-type application, the user usually needs to stare at the screen for a long time, and a large amount of information is displayed. When the cockpit display screen 200 presents the third display state (the ultra-large screen 203), the content can be displayed more clearly, and user experience is better. For the audio-type application, the user needs to pay more attention to listening, and does not need to stare at the screen. Therefore, the cockpit display screen 200 only needs to present the first display state (the slender screen 201). However, time for using the control-type application by the user is usually limited, and an operation is usually simple, and therefore display on a large screen does not need to be used. In this case, the cockpit display screen 200 also presents the first display state (the slender screen 201).

It should be understood that the foregoing table lists only a correspondence between some application types and screen display states. More types of applications may be further run on the cockpit display screen 200, or applications of the types shown in the foregoing table may also correspond to other screen display states. The foregoing table does not constitute any limitation on application types and corresponding screen display states.

C3: The raising/lowering mechanism 300 receives the display screen control signal, and adjusts the height of the cockpit display screen 200. After the processing module 400 sends the display screen control signal to the raising/lowering mechanism 300, the raising/lowering mechanism 300 starts the motor 302 according to the foregoing instruction to perform a raising/lowering operation, and raises the cockpit display screen 200 to expand a display area, or lowers the cockpit display screen 200 to reduce a display area.

In an embodiment, a video player X is currently run on the cockpit display screen 200, and a current screen display stat is the wide screen 202. The processing module 400 determines, by using the application label in AppGallery, that the application X is a video-type application. Based on the foregoing correspondence table, a screen display state corresponding to the video-type application needs to be the ultra-large screen 203, and the processing module 400 generates the display screen control signal, and after receiving the display screen control signal, the raising/lowering mechanism 300 starts the motor 302 to raise the cockpit display screen 200 to the ultra-large screen 203.

In another embodiment, a music player Y is currently run on the cockpit display screen 200, a current screen display state is the slender screen 201, and the user indicates, by using a screen touching operation, an air gesture, voice, or the like, the vehicle to run a video player X. The processing module 400 determines, by using the application label in AppGallery, that the video player X is a video-type application. Based on the foregoing correspondence table, a screen display state corresponding to the video-type application needs to be the ultra-large screen 203, and the processing module 400 generates the display screen control signal, and after receiving the display screen control signal, the raising/lowering mechanism 300 starts the motor 302 to raise the cockpit display screen 200 to the ultra-large screen 203.

In another possible implementation, a correspondence between a specific application and a screen display state may be pre-stored in the storage module 600 of the vehicle, so that the display status of the cockpit display screen 200 is adjusted based on an application that is being run on the cockpit display screen 200 or that is to be run and that is selected by the user. An adjustment process is similar to the foregoing process of adjusting the display status of the cockpit display screen 200 based on the correspondence between a specific application type and a screen display state, and details are not described herein again.

In another possible implementation, the correspondence between a specific application and a screen display state may also be used as one type of application attribute information, and is written into the application in advance by a developer of the application. The processing module 400 obtains the correspondence from the application attribute information, and may determine a corresponding screen display state. For example, the current display state of the cockpit display screen 200 is the slender screen 201, and the processing module 400 determines that the application that is currently being run on the screen or the application that is to be run and that is selected by the user is a video player X; and the processing module 400 determines, based on attribute information pre-written by a developer of the video player X, that the video player X needs to be run in a state of the ultra-large screen 203, and the processing module 400 generates the display screen control signal; and after receiving the display screen control signal, the raising/lowering mechanism 300 starts the motor 302 to raise the cockpit display screen 200 to the ultra-large screen 203.

It should be understood that, when adjusting the display status of the cockpit display screen based on the application that is being run or that is to be run on the cockpit display screen 200 or the application type, the processing module 400 determines the display status of the cockpit display screen with reference to the driving status of the vehicle. If the vehicle is in the manual driving state, the processing module 400 does not run or stops running an application whose display status is the wide screen 202 or the ultra-large screen 203, or runs, in a state of the slender screen 201, the application whose display status is the wide screen 202 or the ultra-large screen 203. For specific implementation, refer to the descriptions in the embodiment related to FIG. 6a. Details are not described herein again.

Control logic of the display status of the cockpit display screen 200 is described in detail above. A display interface of the cockpit display screen 200 is described in detail below with reference to the accompanying drawings. All information of the vehicle may be presented on the cockpit display screen 200. Information that needs to be displayed by the vehicle includes various information such as instrument information, a control application, navigation information, and entertainment information. Therefore, the cockpit display screen 200 may be controlled to display in different areas based on a unified software architecture.

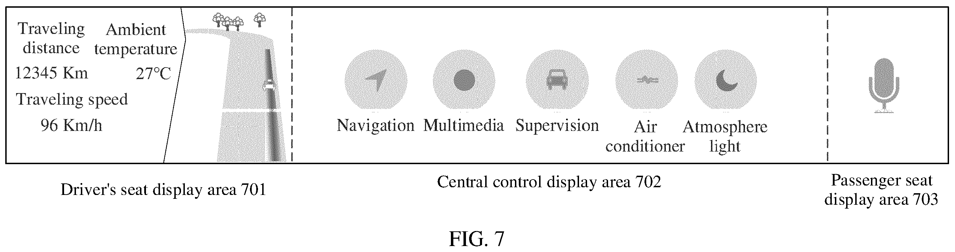

FIG. 7 is a schematic diagram of display of the cockpit display screen 200 in different areas. In this case, the screen is in the first display state (the slender screen 201). As shown in FIG. 7, the cockpit display screen 200 may be divided into a driver's seat display area 701, a central control display area 702, and a passenger seat display area 703. Corresponding to different parts, the cockpit display screen 200 may perform display in different areas and perform control, and may also perform joint display and control.

The driver's seat display area 701 is mainly for a driver to view, is located on a side of a driver's seat, and is used to display various instrument information and driving information of a vehicle. The driving information includes information such as a map or a surrounding environment that is scanned by a sensor. The instrument information includes information such as a traveling speed, a traveling distance, ambient temperature, or a rotational speed of an engine. The instrument information may be displayed on the map in a floating manner. The user may set instrument information to be displayed in the driver's seat display area. Some instrument information such as the driving speed needs to be displayed in the driver's seat display area, and some instrument information such as the ambient temperature may also be configured to be displayed in the central control display area.

The passenger seat display area 703 is for a passenger to view and operate, and is located on a side of a passenger seat. For example, the passenger seat display area 703 may be used by the passenger to watch a move.

The central control display area 702 is for a user inside the vehicle to view, is located between the driver's seat display area and the passenger seat display area, and mainly displays central control and entertainment information, such as navigation, multimedia, vehicle supervision, and adjustment/setting of various parameters of the vehicle. In the self-driving state, the driver's seat display area and the central control display area may jointly display large-scale three-dimensional panoramic information of an ambient environment image of the vehicle.

Due to display of the screen in different areas, the cockpit display screen 200 may support different users in operating different display areas at the same time. For example, when a user A sitting on the driver's seat operates the driver's seat display area 701, a user B sitting on the passenger seat may operate the passenger seat display area 703. A result of the operation of the user A is displayed in the driver's seat display area 701, and a result of the operation of the user B is displayed in the passenger seat display area 703. In addition, both the user A and the user B may operate the central control display area 702, and a result corresponding to the operation of the user on the central control display area 702 may be displayed in the driver's seat display area 701, the central control display area 702, or the passenger seat display area 703. For security purposes, when the vehicle is in a manual driving state, only the driver sitting on the driver's seat can operate the driver's seat display area 701, and only a result corresponding to the operation of the driver can be displayed in the driver's seat display area 701.

In this embodiment provided in this application, driving information, central control information, and front passenger information are integrated into a unified software architecture, and are uniformly presented on the cockpit display screen 200. This simplifies software and hardware structures of the vehicle, and can improve information processing efficiency.

In a possible implementation, the vehicle may monitor information input of the cockpit display screen 200 by using a driver monitoring system (driver monitoring system, DMS), to distinguish between instructions that are input in a multi-channel interaction manner, such as a driver, a front passenger, and a rear passenger. Specifically, a plurality of sensors such as a camera are disposed in a cockpit. An identity of an input person may be identified (for example, the identity is identified based on a seat position of the input person) by integrating information flows of the sensor such as the camera. After the identity is determined, a display area corresponding to an operation result may be determined.

When the cockpit display screen 200 is switched between the slender screen 201 and the wide screen 202, a corresponding display interface is also adaptively adjusted based on a change of a screen size. In the state of the wide screen 202, an application in the central control display area 702 is presented in a form of a card. Compared with the slender screen 201, the driver's seat display area 701 displays more information, and information that originally needs to be displayed in a plurality of areas may be displayed in one area. When the screen size changes, the display interface is adaptively adjusted, so that in different driving scenarios, a same information input source has a unified interface presentation and interaction mechanism, to ensure continuity of information understanding by the user.

How the display interface adapts to a change of a screen display status when the driving status of the vehicle changes is described in detail below with reference to the accompanying drawings.

In an embodiment, the user switches the vehicle from the manual driving state to the self-driving state.

The user starts the vehicle 100, a vehicle-mounted system is started synchronously, and the cockpit display screen 200 is on. Based on a user habit or setting of the user, in this case, the cockpit display screen 200 is in a default driving state, that is, the manual driving state. Therefore, to avoid interference caused by the cockpit display screen 200 to a line of sight of the driver, the cockpit display screen 200 is the slender screen 201 by default.

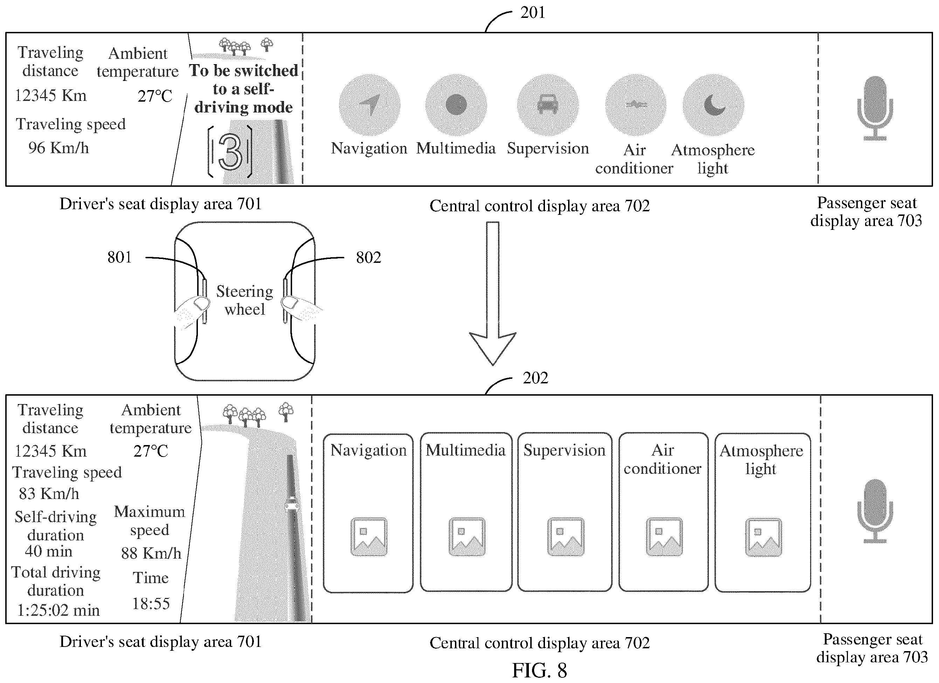

In a driving process, if the user wants to switch the vehicle to the self-driving state, a self-driving switching signal may be generated by using a group of specific hardware operations. In a possible implementation, as shown in FIG. 8, two buttons 801 and 802 are disposed in an area that is on a steering wheel and that is easily touched by both hands. When the buttons 801 and 802 are simultaneously operated and are continuously operated for predetermined duration, a driving status switching signal is generated, to indicate to switch the vehicle to a self-driving mode. In addition, the driver's seat display area 701 of the cockpit display screen 200 displays driving status switching information, indicates that the vehicle is to be switched to the self-driving mode, and starts countdown. In addition, that the vehicle is to be switched to the self-driving mode and countdown may alternatively be prompted through voice, or switching of the driving status may be prompted through both screen display and voice. It should be understood that the buttons 801 and 802 may be touch buttons, or may be physical buttons. A specific form of the button is not limited in this embodiment of this application.

When an operation performed by the user on the buttons 801 and 802 meets a predetermined condition (for example, the two buttons are simultaneously touched for predetermined duration), the system generates a driving status switching signal and transfers the driving status switching signal to the processing module 400. After receiving the driving status switching signal, the processing module 400 activates a self-driving system 500, and the self-driving system 500 starts to replace the driver to control the vehicle 100. In addition, in response to switching of the vehicle 100 from the manual driving state to the self-driving state, the processing module 400 generates a display screen control signal and transmits the signal to the raising/lowering mechanism 300, to control raising/lowering of the cockpit display screen 200. After receiving the display screen control signal, the raising/lowering mechanism 300 adjusts the cockpit display screen 200 from the slender screen 201 to the wide screen 202 that matches the self-driving state.

In a possible implementation, the processing module 400 sends the display screen control signal to the raising/lowering mechanism 300, and also sends a parameter indication to the cockpit display screen 200, to indicate the cockpit display screen 200 to adjust a display interface.

As shown in FIG. 8, when the cockpit display screen 200 is in the state of the slender screen 201, each application is displayed in the central control display area 702 in a form of an icon. When the cockpit display screen 200 is in the state of the wide screen 202, each application is displayed in the central control display area 702 in a form of a card, and more information related to the application may be displayed. The information related to the application may be latest content pushed by the application, version update information of the application, or other content that is set by the user and displayed by the application. Compared with the state of the slender screen 201, the driver's seat display area 701 may also display more types of instrument information and clearer information such as navigation and an environment in the state of the wide screen 202.

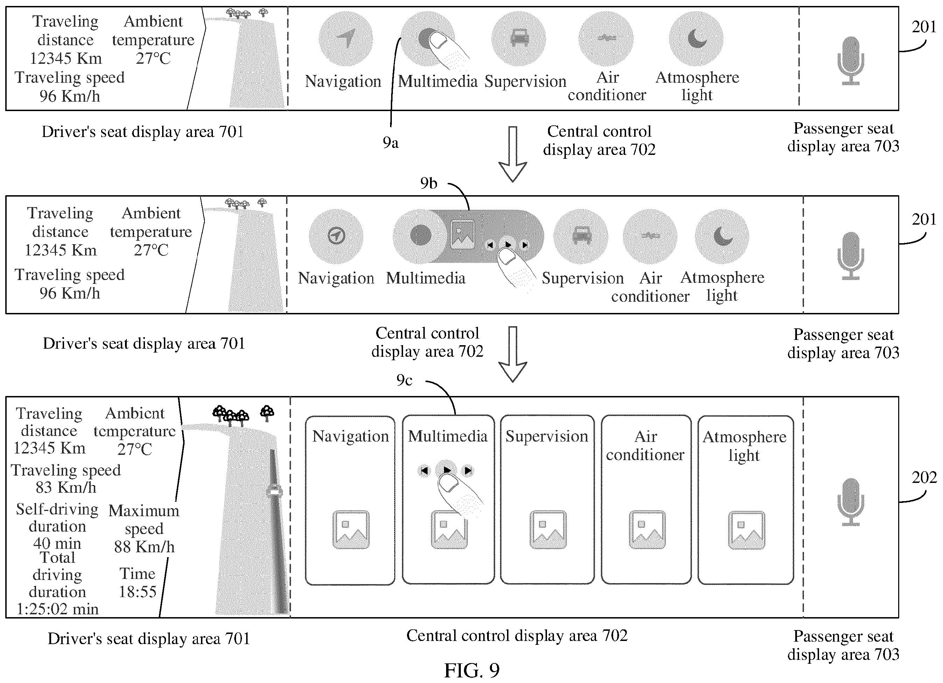

An operation performed by the user on a multimedia application (for example, a music player) is used as an example below to describe a difference between display interfaces in the state of the slender screen 201 and the state of the wide screen 202 with reference to FIG. 9. As shown in FIG. 9, if the user wants to play music, in the state of the slender screen 201, the user needs to first tap a multimedia application icon 9a, and then the multimedia application icon 9a is expanded into 9b. An interface 9b includes a playback control. The user needs to tap, on the interface 9b, a button used to indicate playback, to start playing music. However, in the state of the wide screen 202, the multimedia application is displayed in a form of a card 9c. The user may not only directly tap a play button on an interface of the card 9c to play music, but also see more information related to a multimedia application or a played song, for example, information such as a name and a singer of a song that is being played. It can be learned that, in the state of the slender screen 201, the user needs to perform two operations to achieve the objective, and in the state of the wide screen 202, the user needs to perform only one operation to achieve the objective. Similarly, in the state of the wide screen 202, another application may also display a corresponding interaction control (not shown in the accompanying drawings), to simplify an operation procedure of the user. In the state of the wide screen 202, there are fewer and more convenient user operation steps.

According to the invention, when the cockpit display screen 200 presents the state of the slender screen 201, only pixels in an area of the slender screen area are lighted, and pixels in other areas are not lighted. When the vehicle is switched from the manual driving state to the self-driving state, the processing module 400 sends, to the raising/lowering mechanism 300, a display screen control signal used to indicate to raise the screen, and the cockpit display screen 200 also receives a parameter indication used to indicate to adjust the display interface. In response to receiving of the parameter indication, the cockpit display screen 200 lights all pixels in an area of the wide screen in a screen raising process.

After the screen is raised, the display interface is adaptively adjusted based on a screen raising completion signal (the screen raising completion signal may be fed back by the raising/lowering mechanism to the processing module, and then sent by the processing module to the cockpit display screen), to adapt to a size of a wide-screen display area.

Alternatively, in the screen raising process, once all pixels in the wide screen area are lighted, the display interface is adaptively adjusted without waiting for the screen raising completion signal.

In another possible implementation, when the cockpit display screen 200 presents the state of the slender screen 201, only the area of the slender screen displays information such as driving, an instrument, or an application that is presented to the user, and a background interface is displayed in a remaining area. The background interface may be a default interface of the system, or may be set by the user. Similarly, the display interface may be adaptively adjusted in the screen raising process, or may be adjusted after the screen is raised. A specific process is similar to the foregoing process, and details are not described again.

It should be understood that, when the cockpit display screen 200 is adjusted from the state of the wide screen 202 to the state of the ultra-large screen 203, an implementation of adjusting the display interface of the screen is similar to that of adjusting the state of the slender screen 201 to the wide screen 202, and details are not described herein again.

Therefore, when the vehicle 100 is switched from the manual driving state to the self-driving state, the cockpit display screen 200 is also adjusted from the slender screen 201 to the wide screen 202, and a display area increases, so that surrounding environment information can be better displayed and an entertainment requirement of the user can be better met.

After the vehicle is switched to the self-driving state, the cockpit display screen 200 is switched to the state of the wide screen 202 by default. In this case, the user may implement a plurality of functions by operating a card.

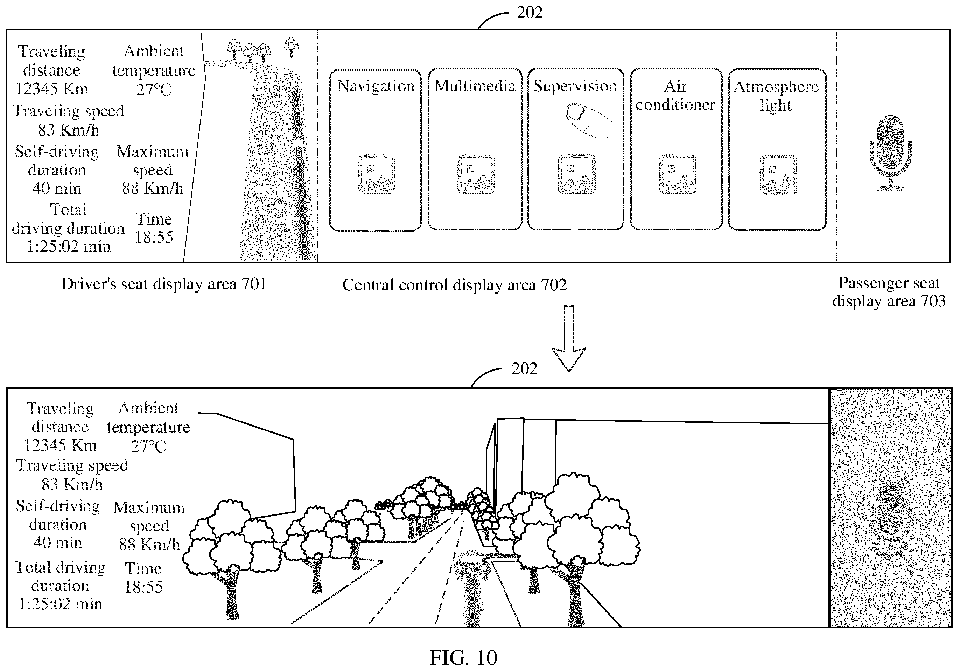

In a possible implementation, as shown in FIG. 10, in the state of the wide screen 202, the user selects a supervision card, and may observe environmental image information of vehicle surroundings that is scanned by the sensor during self-driving. The surrounding environmental image information is displayed in both the driver's seat display area 701 and the central control display area 702, and the instrument information is displayed on a surrounding environmental image of the driver's seat display area 701 in a floating manner.

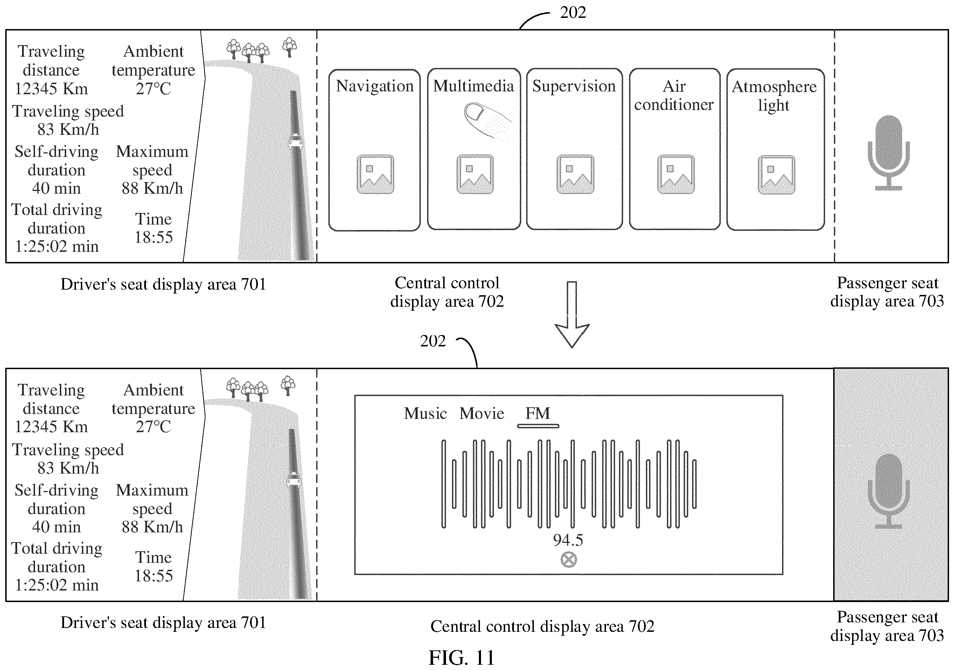

In a possible implementation, in the state of the wide screen 202, when the user selects another card such as a navigation card or a multimedia card, corresponding card information is displayed only in the central control display area 702 (if full-screen display is required, a full-screen operation needs to be performed), and small-scale environment information around the vehicle and instrument information are displayed in the driver's seat display area. FIG. 11 shows a display interface of the cockpit display screen 200 when the user selects the multimedia card. Multimedia information is displayed only in the central control display area 702.

When the vehicle is in the self-driving state or the parking state, because the driver does not need to focus on a driving operation, and interference caused by light emitted by the cockpit display screen 200 to the driver does not need to be considered, the driver may specify a display state (corresponding to different screen sizes) of the cockpit display screen 200 by interacting with the cockpit display screen 200.

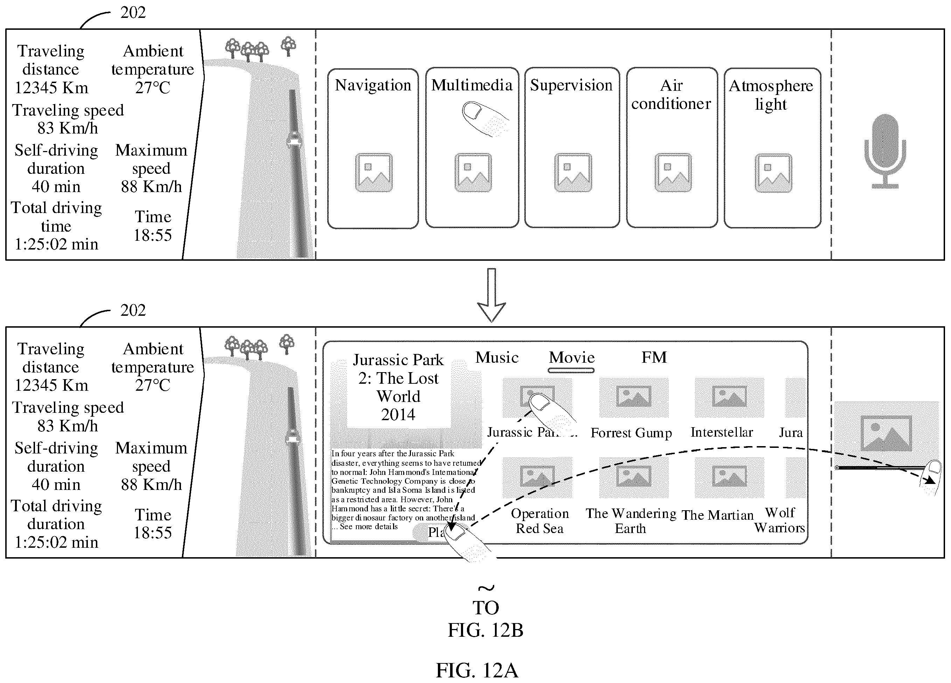

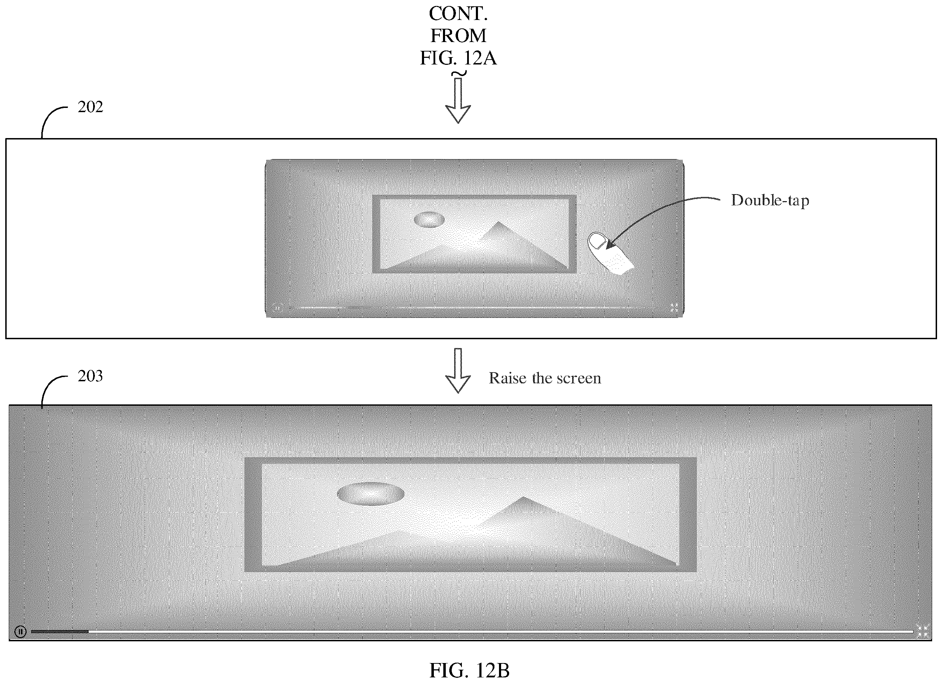

A related embodiment of FIG. 12A and FIG. 12B shows a possible operation manner in which the user adjusts the display status of the cockpit display screen 200 by interacting with the cockpit display screen 200. In the self-driving state or the parking state, the user may choose to use the ultra-large screen 203 to meet a higher entertainment requirement such as playing a movie. As shown in FIG. 12A and FIG. 12B, after the user selects the multimedia card, the central control display area 702 presents several movie resources provided by the system. If the user wants to know related information such as release time, main content, directors, and main actors of a first movie, the user may select the first movie, and in response to a user operation of selecting the first movie, the related information of the first movie is displayed on a left side of the central control display area 702. After browsing the related information of the first movie, the user may determine whether to play the first movie. If the user wants to browse related information of a second movie, the user may continue to select the second movie. If the user chooses to play the first movie, in response to a user operation of playing the movie, the movie is displayed in the passenger seat display area 703, to avoid interference to the driver. The driver's seat display area still displays a surrounding environmental image of the vehicle during self-driving. The user may perform full-screen playback. In response to a user operation of selecting full-screen playback, the first movie is played in full screen in the middle of the wide screen 202, and the cockpit display screen 200 no longer displays other information such as the instrument information or the surrounding environment information. Further, the user may choose to play the movie in full screen by using the ultra-large screen 203, to achieve better movie watching experience. When a movie is played in full screen by using the wide screen 202, in response to a user operation (for example, double-tapping a movie playback area or performing a gesture of moving two fingers away from each other) of choosing to play the movie by using the ultra-large screen 203, the cockpit display screen 200 is raised to the ultra-large screen 203 again, and the movie is played in full screen by using an entire interface of the ultra-large screen 203.

In a possible implementation, the gesture may alternatively be a non-touch gesture. For example, a gesture in the air may be identified by using a hardware device such as a radar. In another possible implementation, the interaction signal may alternatively be a voice signal. For example, the user may send a voice signal such as "raise the screen/lower the screen" or "switch to an ultra-large screen/wide screen/slender screen". The cockpit display screen 200 may be an integrated screen with an integrated voice receiving module, or another voice receiving module in the vehicle receives the voice signal and sends the voice signal to the processing module 400 for processing.

In addition to expanding the display area of the cockpit display screen 200 to meet more entertainment requirements, the user may also reduce the display area of the cockpit display screen 200 by interacting with the cockpit display screen 200 to avoid interference to a line of sight.

In a possible implementation, a virtual button (which may be an existing virtual button, for example, enable full screen/cancel full screen, or may be a newly disposed virtual button) may be disposed on the display interface, to control size adjustment of the cockpit display screen. In the state of the wide screen 202, the screen is lowered after the virtual button is tapped.

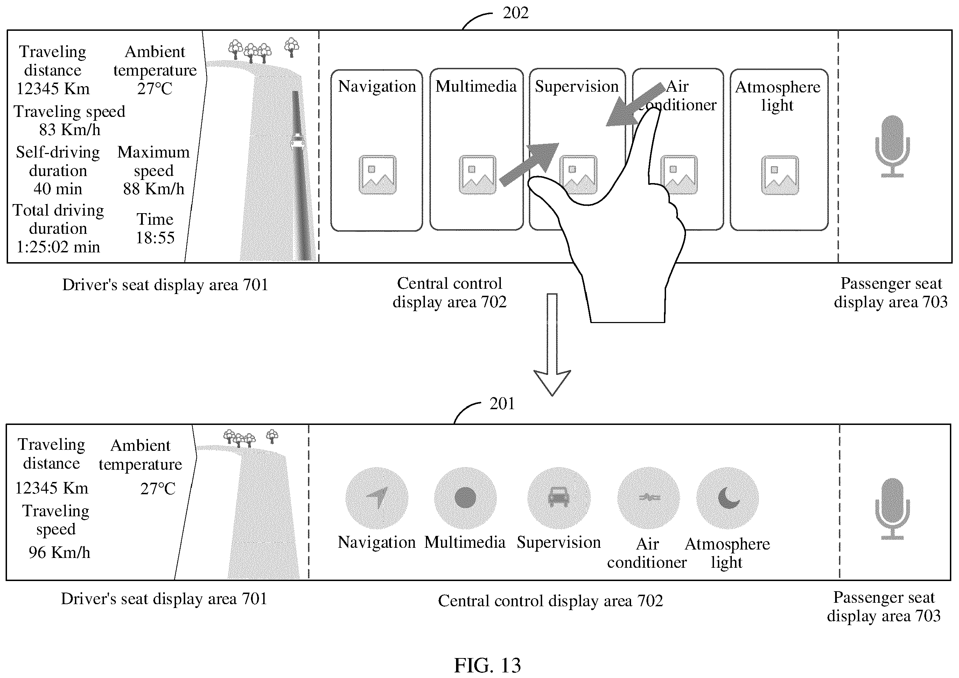

In another possible implementation, a gesture (or another preset gesture) of moving two fingers away from each other may be performed in any touch area on the display interface, to trigger a screen lowering signal. FIG. 13 is a schematic diagram of adjusting the wide screen 202 to the slender screen 201 by performing a gesture of moving two fingers toward each other. As shown in FIG. 13, after the display status is adjusted, the display interface is also correspondingly adjusted. Details are not described herein again.

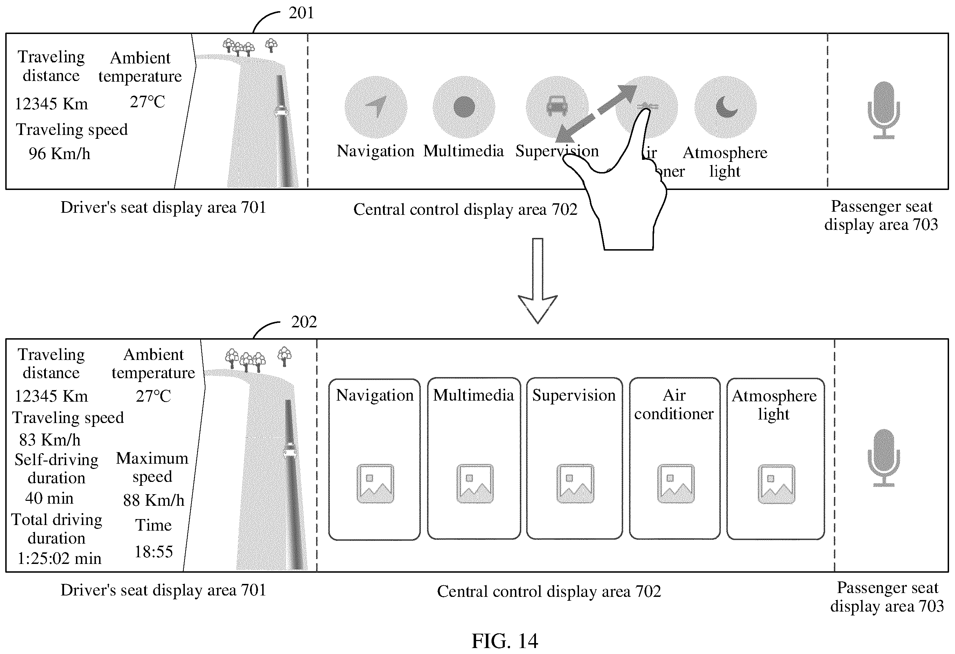

Similarly, when the cockpit display screen 200 is in the state of the slender screen 201, if the user wants to expand the display area of the cockpit display screen 200, the user may tap a virtual button or perform a gesture of moving two fingers away from each other (or may be another gesture such as double-tapping the screen) to trigger a screen raising signal, to adjust the cockpit display screen 200 to the state of the wide screen 202. FIG. 14 is a schematic diagram of adjusting the slender screen 201 to the wide screen 202 by performing a gesture of moving two fingers toward each other. As shown in FIG. 14, after the display status is adjusted, the display interface is also correspondingly adjusted. Details are not described herein again.

In a possible implementation, after the user interacts with the display interface of the cockpit display screen 200, a generated interaction signal is transmitted to the processing module 400, and the processing module 400 performs analysis and processing, to determine whether to respond to the interaction to perform a screen raising or lowering operation. In response to receiving of the interaction signal, the processing module 400 determines, with reference to the driving status, whether to respond to the interaction signal, and controls raising or lowering of the screen, to adjust the size of the screen. If the processing module 400 determines to respond to the interaction signal, the processing module 400 generates a display screen control signal, and sends the display screen control signal to the raising/lowering mechanism 300.

In a possible implementation, in the manual driving state, if an action corresponding to the interaction signal is to raise the screen, the processing module 400 does not respond to the interaction signal. Optionally, the driver may be further reminded, by using voice and/or screen display, that a current state is the manual driving state and a screen raising operation cannot be performed, and the driver needs to pay attention to safe driving. In the self-driving state or the parking state, the user may implement the screen raising operation or the screen lowering operation by interacting with the screen.

As described above, the user may alternatively adjust the display status of the cockpit display screen 200 by interacting with the cockpit display screen 200, so that the size of the cockpit display screen 200 can be adjusted more flexibly. In addition, the processing module 400 generates a display screen control signal with reference to the driving status and the interaction signal, so that interference caused by screen rising of the cockpit display screen 200 to the driver during manual driving is avoided, and this is safe and convenient.

In an embodiment, the user switches the vehicle from the self-driving state to the manual driving state.

When the vehicle is in the self-driving state, the user may operate corresponding hardware to enable the vehicle to return to the manual driving state. The corresponding operation may be braking or another hardware action, or may be a combination of a plurality of hardware actions. For example, when preset duration for which braking is performed and preset duration for which the button on the steering wheel is pressed are met at the same time, the vehicle is switched to manual driving.

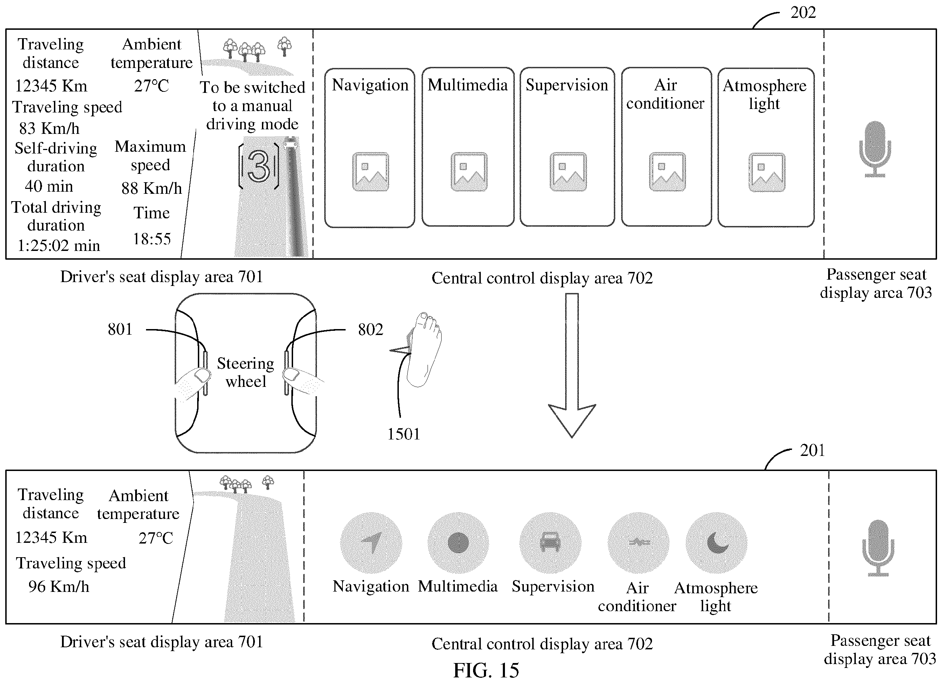

In a possible implementation, as shown in FIG. 15, two buttons 801 and 802 are disposed in an area that is on the steering wheel and that is easily touched by both hands. When the buttons 801 and 802 are simultaneously operated for predetermined duration, and a brake 1501 is continuously stepped on for the predetermined duration (or a vehicle speed is reduced to a predetermined speed or below by stepping on the brake 1501), a driving status switching signal is generated, to indicate to switch the vehicle to a manual driving mode. In addition, the driver's seat display area 701 of the cockpit display screen 200 displays driving status switching information, indicates that the vehicle is to be switched to the manual driving mode, and starts countdown. In addition, that the vehicle is to be switched to the manual driving mode and countdown may alternatively be prompted through voice, or switching of the driving status may be prompted through both screen display and voice. After countdown ends, a corresponding driving status switching signal is generated. It should be understood that the buttons 801 and 802 may be touch buttons, or may be physical buttons. A specific form of the button is not limited in this embodiment of this application.

After receiving the driving status switching signal, the processing module 400 disables the self-driving system 500. After the self-driving system 500 is disabled, the vehicle is in the manual driving state or the parking state. In response to switching of the vehicle from the self-driving state to the manual driving state, the processing module 400 generates a display screen control signal and transmits the display screen control signal to the raising/lowering mechanism 300.

When the self-driving state is switched to the manual driving state, the cockpit display screen 200 needs to be lowered to reduce blocking of a line of sight and interference caused by light emitted by the screen. Therefore, the corresponding display screen control signal is a screen lowering signal. In this case, if the cockpit display screen 200 is in the state of the wide screen 202 or the state of the ultra-large screen 203, after receiving the control signal, the raising/lowering mechanism 300 lowers the screen, and the cockpit display screen 200 changes from the wide screen 202 or the ultra-large screen 203 to the slender screen 201. If the cockpit display screen 200 is in the state of the slender screen 201, the raising/lowering mechanism 300 no longer responds to the display screen control signal or the processing module 400 does not generate the display screen control signal.

After the cockpit display screen 200 returns to the state of the slender screen 201, an application card also changes to an application icon. When the application icon is tapped, a function of tapping the application card in the state of the wide screen 202 can still be implemented. Further, when the vehicle is switched to the manual driving state, the cockpit display screen 200 automatically stops an application that may cause interference to normal driving of the driver, such as a video that is being played or a game that is being played, and a running application that does not cause interference to normal driving of the driver, such as broadcast or music, is not automatically stopped.

Implementation of screen lowering of the cockpit display screen 200 is opposite to implementation of screen raising. In a screen lowering process, adjustment of the display interface is also opposite to that in a screen raising process. For details, refer to the foregoing descriptions of embodiments related to the accompanying drawings. Details are not described herein again.

In consideration of driving safety, switching of the vehicle from the self-driving state to the manual driving state needs to be performed when a vehicle speed is low. Therefore, braking is a suitable cooperative action. An action can performed for a plurality of times to prevent a misoperation.

Further, for safety, the vehicle speed may be used as a determining condition for triggering the driving status switching signal when the vehicle is to be switched from the self-driving state to the manual driving state. For example, the driving status switching signal can be triggered in cooperation with the button on the steering wheel only when the vehicle speed is reduced to a value less than the predetermined value by stepping on the brake. In an embodiment, the fixed value may be set to 0. In this case, self-driving can be switched to manual driving only after the vehicle stops.

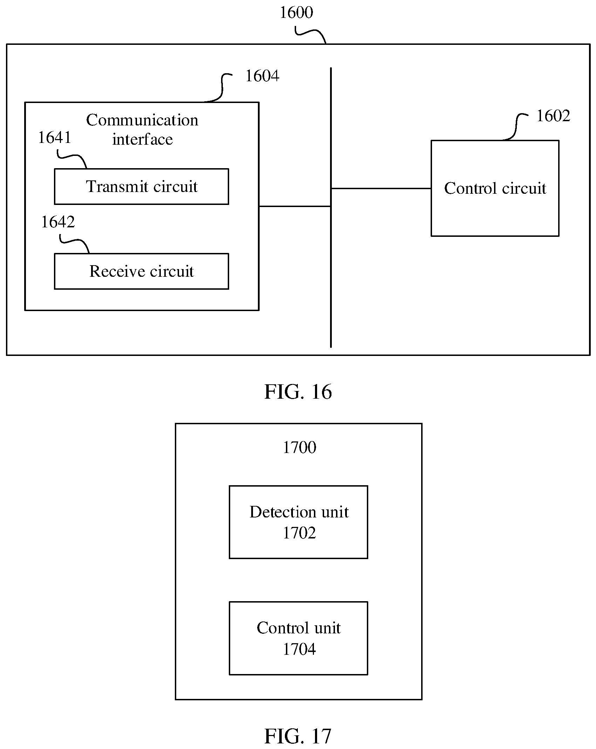

An embodiment of this application further provides a display controller 1600. As shown in FIG. 16, the display controller includes a control circuit 1602 and a communication interface 1604 connected to the control circuit 1602. The display controller 1600 may be implemented in a form of an integrated chip or the like.

The control circuit 1602 may be implemented as one or more processors, one or more controllers, and/or another structure that may be configured to execute a program. The control circuit 1602 may specifically include at least one of a general-purpose processor, a digital signal processor (DSP), a GPU, an application-specific integrated circuit (ASIC), a field programmable gate array (FPGA), or another programmable logic component. The general-purpose processor may include a microprocessor, and any conventional processor, controller, microcontroller, or state machine. The control circuit 1602 may alternatively be implemented as a computing component, such as a combination of the DSP and the microprocessor.

The communication interface 1604 may include a circuit and/or a program to implement bidirectional communication between the display controller 1600 and another vehicle component (for example, a cockpit display screen or a raising/lowering mechanism) and one or more network devices (for example, a router, a switch, or an access point). The communication interface 1604 includes at least one receiving circuit 1642 and/or at least one transmitting circuit 1641. In an embodiment, the communication interface 1604 may be entirely or partially implemented by a wireless modem.

The communication interface 1604 is configured to receive a driving status indication signal of a vehicle. The control circuit 1602 responds to the status indication signal, to generate a control signal for adjusting a display status of the cockpit display screen. The control signal is then sent by the communication interface 1604 to another component of the vehicle, to control the another component to perform steps of the cockpit display screen control method in embodiments of this application, for example, perform some or all of the steps in any embodiment shown in FIG. 7 to FIG. 15.

In an embodiment, the communication interface 1604 is configured to receive a first status indication signal, and the first status indication signal indicates to switch the vehicle to a manual driving state. The control circuit 1602 is configured to generate a first control signal in response to the first status signal. The control signal is used to control to switch the cockpit display screen of the vehicle from a current display state to a first display state, a screen height of the cockpit display screen in the first display state is a first height, and the first height is different from a screen height of the cockpit display screen in the current display state.

In a possible implementation, the communication interface 1604 is further configured to receive a second status indication signal, and the second status indication signal indicates to switch the vehicle to a self-driving state. The control circuit 1602 is further configured to generate a second control signal. The second control signal is used to control the cockpit display screen to present a second display state, a screen height of the cockpit display screen in the second display state is a second height, and the second height is greater than the first height.

In a possible implementation, the cockpit display screen may further present a third display state, a screen height of the cockpit display screen in the third display state is a third height, and the third height is greater than the second height.

In a possible implementation, the communication interface 1604 is further configured to: when the vehicle is in the self-driving state or a parking state, receive an operation signal triggered by a user operation; and the control circuit 1602 is further configured to generate a third control signal in response to the operation signal. The third control signal is used to switch the cockpit display screen to a display state specified by a user, and the display state specified by the user is the first display state or the second display state, or the display state specified by the user is one of the first display state, the second display state, and the third display state.

In a possible implementation, the first control signal is a first display screen control signal, and the first display screen control signal is used to control the raising/lowering mechanism to perform a lowering operation, to reduce the screen height of the cockpit display screen.

In a possible implementation, the second control signal is a second display screen control signal, and the second display screen control signal is used to control the raising/lowering mechanism to perform a raising operation, to increase the screen height of the cockpit display screen.

An embodiment of this application provides a cockpit display screen control apparatus 1700. As shown in FIG. 17, the cockpit display screen control apparatus includes a detection unit 1702 and a control unit 1704. The detection unit 1702 may detect a driving status of a vehicle by using various sensors of the vehicle, such as a camera or a vehicle speed sensor. The detection unit 1702 may further detect a touch operation performed by the user on the cockpit display screen and/or a system signal used by the vehicle to run a specific application program. The control unit 1704 cooperates with the detection unit 1702, to implement steps of the cockpit display screen control method in embodiments of this application, for example, perform some or all of the steps in any embodiment shown in FIG. 7 to FIG. 15.

In an embodiment, the detection unit 1702 is configured to detect a status of the vehicle, and the status includes a manual driving state, a self-driving state, or a parking state. The control unit 1704 is configured to control to switch a cockpit display screen of the vehicle from a current display state to a first display state in response to switching of the vehicle to the manual driving state. A screen height of the cockpit display screen in the first display state is a first height, and the first height is different from a screen height of the cockpit display screen in the current display state.

In a possible implementation, the control unit 1704 is further configured to: in response to switching of the vehicle to the self-driving state, control the cockpit display screen to present a second display state. A screen height of the cockpit display screen in the second display state is a second height, and the second height is greater than the first height.

In a possible implementation, the cockpit display screen may further present a third display state, a screen height of the cockpit display screen in the third display state is a third height, and the third height is greater than the second height.

In a possible implementation, the control unit 1704 is further configured to: when the vehicle is in the self-driving state or a parking state, switch, in response to a display status switching operation of a user, the cockpit display screen to a display state specified by the user. The display state specified by the user is the first display state or the second display state, or the display state specified by the user is one of the first display state, the second display state, and the third display state.

In a possible implementation, the control unit 1704 is further configured to: when the vehicle is in the self-driving state or the parking state, switch, in response to a user operation of running a first application, the cockpit display screen to a display state corresponding to the first application. The first application corresponds to the first display state or the second display state.

In a possible implementation, the control unit 1704 is specifically configured to: generate a display screen control signal; and send the display screen control signal to the raising/lowering mechanism. The display screen control signal is used to control the raising/lowering mechanism to perform a raising/lowering operation, to adjust the screen height of the cockpit display screen.

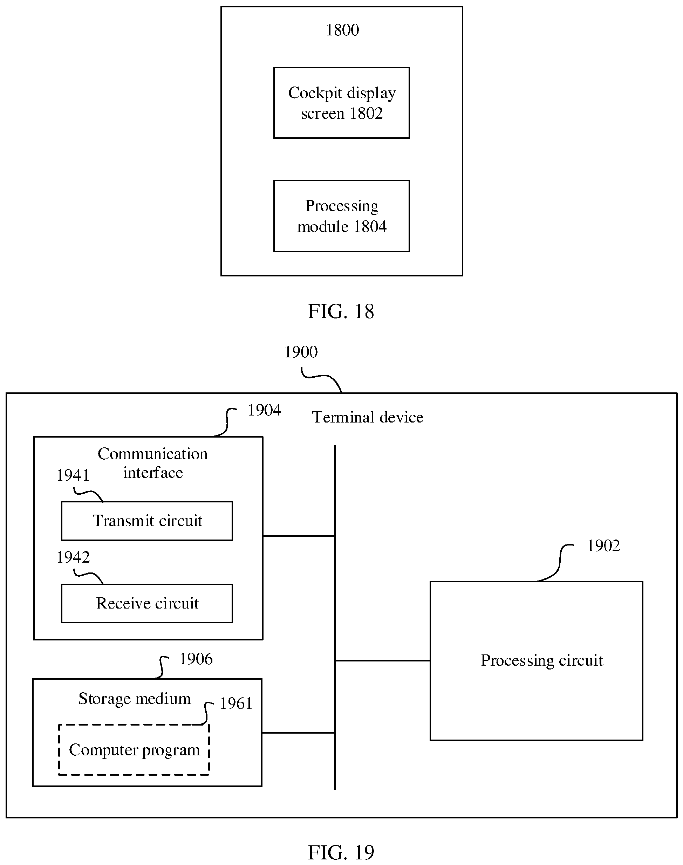

As shown in FIG. 18, an embodiment of this application further provides a cockpit display apparatus 1800. The cockpit display apparatus 1800 includes a cockpit display screen 1802 and a processing module 1804. For a specific implementation of the cockpit display screen 1802, refer to the descriptions of the cockpit display screen 200 in the embodiment related to FIG. 4. For a specific implementation of the processing module 1804, refer to the descriptions of the processing module 400 in the embodiment related to FIG. 4.

In a possible implementation, the processing module 1804 is configured to control to switch the cockpit display screen 1802 from a current display state to a first display state in response to switching a vehicle to a manual driving state. A screen height of the cockpit display screen 1802 in the first display state is a first height, and the first height is different from a screen height of the cockpit display screen 1802 in the current display state.

In a possible implementation, the processing module 1804 is further configured to: in response to switching of the vehicle to a self-driving state, control the cockpit display screen 1802 to present a second display state. A screen height of the cockpit display screen 1802 in the second display state is a second height, and the second height is greater than the first height.

In a possible implementation, the cockpit display screen 1802 may further present a third display state, a screen height of the cockpit display screen 1802 in the third display state is a third height, and the third height is greater than the second height. When the vehicle is in the self-driving state or a parking state, the processing module 1804 switches, in response to a display status switching operation of a user, the cockpit display screen 1802 to a display state specified by the user. The display state specified by the user is the first display state or the second display state, or the display state specified by the user is one of the first display state, the second display state, and the third display state.

In a possible implementation, when the vehicle is in the self-driving state or the parking state, the processing module 1804 is further configured to switch, in response to a user operation of running a first application, the cockpit display screen to a display state corresponding to the first application. The first application corresponds to the first display state or the second display state.

Optionally, the cockpit display apparatus 1800 further includes a raising/lowering mechanism. The raising/lowering mechanism is configured to receive a display screen control signal to perform a raising/lowering operation based on the display screen control signal, to adjust the screen height of the cockpit display screen 1802. For a specific implementation of the raising/lowering mechanism, refer to the descriptions of the raising/lowering mechanism 300 in the embodiment related to FIG. 5.

An embodiment of this application further provides an intelligent cockpit. In a possible implementation, the intelligent cockpit includes a cockpit display screen and the cockpit display screen control apparatus 1700 described in any one of the foregoing possible implementations. The cockpit display screen control apparatus 1700 is configured to control a display status of the cockpit display screen. For a specific implementation of the cockpit display screen, refer to the descriptions of the cockpit display screen 200 in the embodiment related to FIG. 4. In another possible implementation, the intelligent cockpit includes: a detection system, where the detection system is configured to detect a driving status of a vehicle; and the cockpit display apparatus 1800 described in any one of the foregoing possible implementations, configured to control the cockpit display screen based on the driving status of the vehicle.

An embodiment of this application further provides a vehicle, including the intelligent cockpit described in any one of the foregoing possible implementations. The vehicle may perform some or all of the steps in any embodiment shown in FIG. 6a to FIG. 15, to intelligently adjust the cockpit display screen, so that a display status of the cockpit display screen adapts to a driving status, an application type, and the like, to improve user experience.

In a possible implementation, the vehicle further includes a communication system, and the communication system is configured to implement communication between the intelligent cockpit and another module in the vehicle and/or is configured to implement communication between components in the intelligent cockpit. For a specific implementation of the communication system, refer to the descriptions of the communication module 700 in the embodiment related to FIG. 4.

In a possible implementation, the vehicle further includes a self-driving system, to implement a self-driving function. For a specific implementation of the self-driving system, refer to the descriptions of the self-driving system 500 in the embodiment related to FIG. 4.

An embodiment of this application further provides a terminal device 1900. As shown in FIG. 19, the terminal device 1900 includes a processing circuit 1902, and a communication interface 1904 and a storage medium 1906 that are connected to the processing circuit 1902.

The processing circuit 1902 is configured to process data, control data access and storage, send a command, and control another component to perform the steps of the cockpit display screen control method in embodiments of this application, for example, perform some or all of the steps in any embodiment shown in FIG. 6a to FIG. 15. The processing circuit 1902 may be implemented as one or more processors, one or more controllers, and/or another structure that may be configured to execute a program. The processing circuit 1902 may specifically include at least one of a general-purpose processor, a digital signal processor (digital signal processor, DSP), a GPU, an application-specific integrated circuit (application-specific integrated circuit, ASIC), a field programmable gate array (field programmable gate array, FPGA), or another programmable logic component. The general-purpose processor may include a microprocessor, and any conventional processor, controller, microcontroller, or state machine. The processing circuit 1902 may alternatively be implemented as a computing component, such as a combination of the DSP and the microprocessor.

The communication interface 1904 may include a circuit and/or a program to implement bidirectional communication between the terminal device 1900 and one or more network devices (for example, a router, a switch, or an access point). The communication interface 1904 includes at least one receiving circuit 1942 and/or at least one transmitting circuit 1941. In an embodiment, the communication interface 1904 may be entirely or partially implemented by a wireless modem.

The storage medium 1906 may include a non-transitory computer-readable storage medium (non-transitory computer-readable storage medium), for example, a magnetic storage device (for example, a hard disk, a floppy disk, or a magnetic strip), an optical storage medium (for example, a digital versatile disc (digital versatile disc ,DVD)), a smart card, a flash memory device, a random access memory (random access memory ,RAM), a read-only memory (read-only memory ,ROM), a programmable ROM (programmable ROM ,PROM), an erasable PROM (erasable PROM ,EPROM), a register, and any combination thereof. The storage medium 1906 may be coupled to the processing circuit 1902, so that the processing circuit 1902 may read information and write information to the storage medium 1906. Specifically, the storage medium 1906 may be integrated into the processing circuit 1902, or the storage medium 1906 and the processing circuit 1902 may be separated. The storage medium 1906 may store a computer program 1661. When the computer program 1661 is executed by the processing circuit 1902, the processing circuit 1902 is configured to perform the steps of the cockpit display screen control method in embodiments of this application, for example, perform some or all of the steps in any embodiment shown in FIG. 6a to FIG. 15.

An embodiment of this application further provides a computer-readable storage medium. The computer-readable storage medium stores instructions, and when the instructions are executed, the cockpit display screen control method in the foregoing method embodiments is performed.

An embodiment of this application further provides a computer program product including instructions. When the instructions are executed, the cockpit display screen control method in the foregoing method embodiments is performed.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, example units and algorithm steps described with reference to the embodiments disclosed in this specification may be implemented by electronic hardware, computer software, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It should be noted that terms "executable program", "computer program", and "program" used in embodiments of this application should be widely interpreted as including but not limited to an instruction, an instruction set, code, a code segment, a subprogram, a software module, an application, a software package, a thread, a process, a function, firmware, middleware, and the like. A person skilled in the art may clearly understand that, for the purpose of convenient and brief description, for a detailed working process of the foregoing apparatus and unit, refer to a corresponding process in the method embodiments. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The software product is stored in a storage medium, and includes several instructions for indicating a computer device (which may be a personal computer, a server, or a network device) to perform all or some of the steps of the methods described in embodiments of this application. The foregoing storage medium includes: any medium that can store an executable program, such as a USB flash drive, a removable hard disk, a read-only memory, a random access memory, a magnetic disk, or an optical disc.

## Claims

1. A cockpit display screen (200, 1802) control method, comprising:
controlling to switch a cockpit display screen (200, 1802) of a vehicle (100) from a current display state to a first display state in response to switching of the vehicle (100) to a manual driving state,
wherein a screen height of the cockpit display screen (200, 1802) in the first display state is a first height, and the first height is different from a screen height of the cockpit display screen (200, 1802) in the current display state; and
wherein the controlling to switch a cockpit display screen (200, 1802) of a vehicle (100) from a current display state to a first display state comprises:
generating (A1) a display screen control signal; and
sending (A2) the display screen control signal to a raising/lowering mechanism (300),
wherein the display screen control signal is used to control the raising/lowering mechanism (300) to perform (A3) a physical raising/lowering operation, to adjust the screen height of the cockpit display screen (200, 1802); and
further comprising:
controlling, in response to switching of the vehicle (100) to a self-driving state, the cockpit display screen (200, 1802) to present a second display state, wherein a screen height of the cockpit display screen (200, 1802) in the second display state is a second height, and
the second height is greater than the first height; and wherein
when the cockpit display screen (200, 1802) is in the first display state, only pixels in an area of the first height are lighted and pixels in other areas are not lighted; and
when the cockpit display screen (200, 1802) is in the second display state, all pixels in an area of the second height are lighted.

2. The method according to claim 1, wherein the cockpit display screen (200, 1802) further displays a third display state, and a screen height of the cockpit display screen (200, 1802) in the third display state is a third height; and
the third height is greater than the second height.

3. The method according to claim 1 or 2, further comprising:
when the vehicle (100) is in the self-driving state or a parking state, switching, in response to a display status switching operation of a user, the cockpit display screen (200, 1802) to a display state specified by the user, wherein the display state specified by the user is the first display state or the second display state.

4. The method according to any one of claims 1 to 3, further comprising:
when the vehicle (100) is in the self-driving state or the parking state, switching, in response to a user operation of running a first application, the cockpit display screen (200, 1802) to a display state corresponding to the first application, wherein the first application corresponds to the first display state or the second display state.

5. The method according to claim 1, further comprising:
displaying, by the cockpit display screen (200, 1802) in the first display state, a first interface in response to the switching of the vehicle (100) to the manual driving state, wherein the first interface comprises an icon of a first application.

6. The method according to claim 5, further comprising:
displaying, by the cockpit display screen (200, 1802) in the second display state, a second interface in response to switching of the vehicle (100) to the self-driving state, wherein the second interface comprises a first card corresponding to the first application, and
an area of the second interface is greater than a display area (701-703) of the first interface.

7. The method according to claim 6, wherein the first card further comprises a control used by a user to interact with the first application.

8. The method according to claim 6 or 7, further comprising:
when the vehicle (100) is in the self-driving state or a parking state, displaying, in response to a display interface switching operation of the user, a display interface specified by the user, wherein the display interface specified by the user is the first interface or the second interface.

9. The method according to any one of claims 6 to 8, further comprising:
when the vehicle (100) is in the self-driving state or the parking state, adjusting a display interface of the cockpit display screen (200, 1802) in response to a user operation of running the first application, so that an adjusted display area of the display interface adapts to the first application.

10. The method according to any one of claims 6 to 9 and 2, wherein when the vehicle (100) is in the self-driving state or the parking state, the cockpit display screen (200, 1802) may further display, in the third display state, a third interface, and a display area (701-703) of the third interface is greater than a display area (701-703) of the second interface.

11. A cockpit display screen (200, 1802) control apparatus (1700, 1800), comprising:
a detection unit (1702), configured to detect a status of a vehicle (100), wherein the status comprises a manual driving state, a self-driving state, or a parking state; and
a control unit (1704), configured to control to switch a cockpit display screen (200, 1802) of the vehicle (100) from a current display state to a first display state in response to switching of the vehicle (100) to the manual driving state, wherein a screen height of the cockpit display screen (200, 1802) in the first display state is a first height, and the first height is different from a screen height of the cockpit display screen (200, 1802) in the current display state; and
the cockpit display screen (200, 1802) control apparatus (1700, 1800) performs the method according to any one of claims of 1 to 10.

12. A non-transitory computer-readable medium storing computer instructions, that when executed by one or more processors, cause an apparatus (1700, 1800) to perform the method according to any one of claims 1 to 10.

## Patentansprüche

1. Steuerverfahren für Cockpit-Anzeigebildschirme (200, 1802), das Folgendes umfasst:
Steuern, um in Reaktion auf ein Umschalten des Fahrzeugs (100) zu einem manuellen Fahrzustand einen Cockpit-Anzeigebildschirm (200, 1802) eines Fahrzeugs (100) von einem aktuellen Anzeigezustand zu einem ersten Anzeigezustand umzuschalten,
wobei eine Bildschirmhöhe des Cockpit-Anzeigebildschirms (200, 1802) im ersten Anzeigezustand eine erste Höhe ist und die erste Höhe von einer Bildschirmhöhe des Cockpit-Anzeigebildschirms (200, 1802) im aktuellen Anzeigezustand verschieden ist;
und
wobei das Steuern, um einen Cockpit-Anzeigebildschirm (200, 1802) eines Fahrzeugs (100) von einem aktuellen Anzeigezustand zu einem ersten Anzeigezustand umzuschalten, Folgendes umfasst:
Erzeugen (A1) eines Anzeigebildschirmsteuersignals und
Senden (A2) des Anzeigebildschirmsteuersignals zu einem Anhebe-/Absenkmechanismus (300),
wobei das Anzeigebildschirmsteuersignal verwendet wird, um den Anhebe-/Absenkmechanismus (300) zu steuern, eine physische Anhebe-/Absenkoperation durchzuführen (A3), um die Bildschirmhöhe des Cockpit-Anzeigebildschirms (200, 1802) anzupassen; und
das ferner Folgendes umfasst:
Steuern in Reaktion auf ein Umschalten des Fahrzeugs (100) zu einem Selbstfahrzustand des Cockpit-Anzeigebildschirms (200, 1802), einen zweiten Anzeigezustand darzustellen, wobei eine Bildschirmhöhe des Cockpit-Anzeigebildschirms (200, 1802) im zweiten Anzeigezustand eine zweite Höhe ist und die zweite Höhe größer als die erste Höhe ist; wobei
dann, wenn der Cockpit-Anzeigebildschirm (200, 1802) im ersten Anzeigezustand ist, lediglich Pixel in einer Fläche der ersten Höhe erleuchtet sind und Pixel in weiteren Flächen nicht erleuchtet sind; und
dann, wenn der Cockpit-Anzeigebildschirm (200, 1802) im zweiten Anzeigezustand ist, alle Pixel in einer Fläche der zweiten Höhe erleuchtet sind.

2. Verfahren nach Anspruch 1, wobei der Cockpit-Anzeigebildschirm (200, 1802) ferner einen dritten Anzeigezustand anzeigt und eine Bildschirmhöhe des Cockpit-Anzeigebildschirms (200, 1802) im dritten Anzeigezustand eine dritte Höhe ist; und die dritte Höhe größer als die zweite Höhe ist.

3. Verfahren nach Anspruch 1 oder 2, das ferner Folgendes umfasst:
wenn das Fahrzeug (100) in dem Selbstfahrzustand oder einem Parkzustand ist, Umschalten in Reaktion auf eine Anzeigestatusumschaltoperation eines Benutzers des Cockpit-Anzeigebildschirms (200, 1802) zu einem Anzeigezustand, der durch den Benutzer festgelegt ist, wobei der Anzeigezustand, der durch den Benutzer festgelegt ist, der erste Anzeigezustand oder der zweite Anzeigezustand ist.

4. Verfahren nach einem der Ansprüche 1 bis 3, das ferner Folgendes umfasst:
wenn das Fahrzeug (100) in dem Selbstfahrzustand oder dem Parkzustand ist, Umschalten in Reaktion auf eine Benutzerbetätigung des Ausführens einer ersten Anwendung des Cockpit-Anzeigebildschirms (200, 1802) zu einem Anzeigezustand, der der ersten Anwendung entspricht, wobei die erste Anwendung dem ersten Anzeigezustand oder dem zweiten Anzeigezustand entspricht.

5. Verfahren nach Anspruch 1, das ferner Folgendes umfasst:
Anzeigen durch den Cockpit-Anzeigebildschirm (200, 1802) im ersten Anzeigezustand einer ersten Schnittstelle in Reaktion auf das Umschalten des Fahrzeugs (100) zum manuellen Fahrzustand, wobei die erste Schnittstelle ein Symbol einer ersten Anwendung umfasst.

6. Verfahren nach Anspruch 5, das ferner Folgendes umfasst:
Anzeigen durch den Cockpit-Anzeigebildschirm (200, 1802) im zweiten Anzeigezustand einer zweiten Schnittstelle in Reaktion auf ein Umschalten des Fahrzeugs (100) zum Selbstfahrzustand, wobei die zweite Schnittstelle eine erste Karte umfasst, die der ersten Anwendung entspricht, und
eine Fläche der zweiten Schnittstelle größer als eine Anzeigefläche (701-703) der ersten Schnittstelle ist.

7. Verfahren nach Anspruch 6, wobei die erste Karte ferner eine Steuerung umfasst, die durch einen Benutzer verwendet wird, um mit der ersten Anwendung zu interagieren.

8. Verfahren nach Anspruch 6 oder 7, das ferner Folgendes umfasst:
wenn das Fahrzeug (100) in dem Selbstfahrzustand oder einem Parkzustand ist, Anzeigen in Reaktion auf eine Anzeigeschnittstellenumschaltoperation des Benutzers einer Anzeigeschnittstelle, die durch den Benutzer festgelegt ist, wobei die Anzeigeschnittstelle, die durch den Benutzer festgelegt ist, die erste Schnittstelle oder die zweite Schnittstelle ist.

9. Verfahren nach einem der Ansprüche 6 bis 8, das ferner Folgendes umfasst:
wenn das Fahrzeug (100) in dem Selbstfahrzustand oder dem Parkzustand ist, Anpassen einer Anzeigeschnittstelle des Cockpit-Anzeigebildschirms (200, 1802) in Reaktion auf eine Benutzerbetätigung des Ausführens der ersten Anwendung derart, dass eine angepasste Anzeigefläche der Anzeigeschnittstelle sich an die erste Anwendung anpasst.

10. Verfahren nach einem der Ansprüche 6 bis 9 und 2, wobei dann, wenn das Fahrzeug (100) in dem Selbstfahrzustand oder dem Parkzustand ist, der Cockpit-Anzeigebildschirm (200, 1802) ferner im dritten Anzeigezustand eine dritte Schnittstelle anzeigen kann und eine Anzeigefläche (701-703) der dritten Schnittstelle größer als eine Anzeigefläche (701-703) der zweiten Schnittstelle ist.

11. Steuervorrichtung (1700, 1800) für Cockpit-Anzeigebildschirme (200, 1802), die Folgendes umfasst:
eine Detektionseinheit (1702), die konfiguriert ist, einen Status eines Fahrzeugs (100) zu detektieren, wobei der Status einen manuellen Fahrzustand, einen Selbstfahrzustand oder einen Parkzustand umfasst; und
eine Steuereinheit (1704), die konfiguriert ist, zu steuern, um in Reaktion auf ein Umschalten des Fahrzeugs (100) zum manuellen Fahrzustand einen Cockpit-Anzeigebildschirm (200, 1802) des Fahrzeugs (100) von einem aktuellen Anzeigezustand zu einem ersten Anzeigezustand umzuschalten, wobei eine Bildschirmhöhe des Cockpit-Anzeigebildschirms (200, 1802) im ersten Anzeigezustand eine erste Höhe ist und die erste Höhe von einer Bildschirmhöhe des Cockpit-Anzeigebildschirms (200, 1802) im aktuellen Anzeigezustand verschieden ist; und
die Steuervorrichtung (1700, 1800) für Cockpit-Anzeigebildschirme (200, 1802) das Verfahren nach einem der Ansprüche 1 bis 10 durchführt.

12. Nichtflüchtiges computerlesbares Medium, das Computerbefehle speichert, die, wenn sie durch einen oder mehrere Prozessoren ausgeführt werden, bewirken, dass eine Vorrichtung (1700, 1800) das Verfahren nach einem der Ansprüche 1 bis 10 durchführt.

## Revendications

1. Procédé de commande d'écran d'affichage de cockpit (200, 1802), comprenant l'étape consistant à :
commander la commutation d'un écran d'affichage de cockpit (200, 1802) d'un véhicule (100) depuis un état d'affichage actuel vers un premier état d'affichage en réponse à la commutation du véhicule (100) vers un état de conduite manuelle,
dans lequel une hauteur d'écran de l'écran d'affichage de cockpit (200, 1802) dans le premier état d'affichage est une première hauteur, et la première hauteur est différente d'une hauteur d'écran de l'écran d'affichage de cockpit (200, 1802) dans l'état d'affichage actuel ; et
dans lequel la commande de la commutation d'un écran d'affichage de cockpit (200, 1802) d'un véhicule (100) depuis un état d'affichage actuel vers un premier état d'affichage comprend les étapes consistant à :
générer (A1) un signal de commande d'écran d'affichage ; et
envoyer (A2) le signal de commande d'écran d'affichage à un mécanisme d'élévation/abaissement (300),
dans lequel le signal de commande d'écran d'affichage est utilisé pour commander le mécanisme d'élévation/abaissement (300) pour lui faire effectuer (A3) une opération d'élévation/abaissement physique, pour régler la hauteur d'écran de l'écran d'affichage de cockpit (200, 1802) ; et
comprend également l'étape consistant à :
commander, en réponse à la commutation du véhicule (100) vers un état d'auto-conduite, l'écran d'affichage de cockpit (200, 1802) pour lui faire présenter un deuxième état d'affichage, une hauteur d'écran de l'écran d'affichage de cockpit (200, 1802) dans le deuxième état d'affichage étant une deuxième hauteur, et la deuxième hauteur étant supérieure à la première hauteur ; et dans lequel
lorsque l'écran d'affichage de cockpit (200, 1802) est dans le premier état d'affichage, seuls des pixels situés dans une région de la première hauteur sont allumés, des pixels situés dans d'autres régions ne sont pas allumés ; et
lorsque l'écran d'affichage de cockpit (200, 1802) est dans le deuxième état d'affichage, tous les pixels situés dans une région de la deuxième hauteur sont allumés.

2. Procédé selon la revendication 1, dans lequel l'écran d'affichage de cockpit (200, 1802) comprend également un troisième état d'affichage, et une hauteur d'écran de l'écran d'affichage de cockpit (200, 1802) dans le troisième état d'affichage est une troisième hauteur ; et
la troisième hauteur est supérieure à la deuxième hauteur.

3. Procédé selon la revendication 1 ou 2, comprenant également l'étape consistant à :
lorsque le véhicule (100) est dans l'état d'auto-conduite ou dans un état de stationnement, commuter, en réponse à une opération de commutation de statut d'affichage d'un utilisateur, l'écran d'affichage de cockpit (200, 1802) vers un état d'affichage spécifié par l'utilisateur, l'état d'affichage spécifié par l'utilisateur étant le premier état d'affichage ou le deuxième état d'affichage.

4. Procédé selon l'une quelconque des revendications 1 à 3, comprenant également l'étape consistant à :
lorsque le véhicule (100) est dans l'état d'auto-conduite ou dans l'état de stationnement, commuter, en réponse à une opération d'utilisateur consistant à exécuter une première application, l'écran d'affichage de cockpit (200, 1802) vers un état d'affichage correspondant à la première application, la première application correspondant au premier état d'affichage ou au deuxième état d'affichage.

5. Procédé selon la revendication 1, comprenant également l'étape consistant à :
afficher, par l'écran d'affichage de cockpit (200, 1802) dans le premier état d'affichage, une première interface en réponse à la commutation du véhicule (100) vers l'état de conduite manuelle, la première interface comprenant une icône d'une première application.

6. Procédé selon la revendication 5, comprenant également l'étape consistant à :
afficher, par l'écran d'affichage de cockpit (200, 1802) dans le deuxième état d'affichage, une deuxième interface en réponse à la commutation du véhicule (100) vers l'état d'auto-conduite, la deuxième interface comprenant une première carte correspondant à la première application, et une superficie de la deuxième interface étant supérieure à une superficie d'affichage (701-703) de la première interface.

7. Procédé selon la revendication 6, dans lequel la première carte comprend également une commande utilisée par un utilisateur pour interagir avec la première application.

8. Procédé selon la revendication 6 ou 7, comprenant également l'étape consistant à :
lorsque le véhicule (100) est dans l'état d'auto-conduite ou dans un état de stationnement, afficher, en réponse à une opération de commutation d'interface de l'utilisateur, une interface d'affichage spécifiée par l'utilisateur, l'interface d'affichage spécifiée par l'utilisateur étant la première interface ou la deuxième interface.

9. Procédé selon l'une quelconque des revendications 6 à 8, comprenant également l'étape consistant à :
lorsque le véhicule (100) est dans l'état d'auto-conduite ou dans l'état de stationnement, régler une interface d'affichage de l'écran d'affichage de cockpit (200, 1802) en réponse à une opération d'utilisateur consistant à exécuter la première application, afin qu'une superficie d'affichage réglée de l'interface d'affichage s'adapte à la première application.

10. Procédé selon l'une quelconque des revendications 6 à 9 et 2, dans lequel, lorsque le véhicule (100) est dans l'état d'auto-conduite ou dans l'état de stationnement, l'écran d'affichage de cockpit (200, 1802) peut également afficher, dans le troisième état d'affichage, une troisième interface, et une superficie d'affichage (701-703) de la troisième interface est supérieure à une superficie d'affichage (701-703) de la deuxième interface.

11. Appareil de commande (1700, 1800) d'écran d'affichage de cockpit (200, 1802), comprenant :
une unité de détection (1702), configurée pour détecter un statut d'un véhicule (100), le statut comprenant un état de conduite manuelle, un état d'auto-conduite ou un état de stationnement ; et
une unité de commande (1704), configurée pour commander la commutation d'un écran d'affichage de cockpit (200, 1802) du véhicule (100) depuis un état d'affichage actuel vers un premier état d'affichage en réponse à la commutation du véhicule (100) vers l'état de conduite manuelle, une hauteur d'écran de l'écran d'affichage de cockpit (200, 1802) dans le premier état d'affichage étant une première hauteur, et la première hauteur étant différente d'une hauteur d'écran de l'écran d'affichage de cockpit (200, 1802) dans l'état d'affichage actuel ; et
l'appareil de commande (1700, 1800) d'écran d'affichage de cockpit (200, 1802) réalisant le procédé selon l'une quelconque des revendications 1 à 10.

12. Support non transitoire lisible par ordinateur stockant des instructions informatiques qui, lorsqu'elles sont exécutées par un ou plusieurs processeurs, amènent un appareil (1700, 1800) à réaliser le procédé selon l'une quelconque des revendications 1 à 10.
